# EUROPEAN PATENT APPLICATION

(11) **EP 2 786 908 A1**
(43) Date of publication of application: **08.10.2014**
(21) Application number: 13196828.1
(22) Date of filing: 12.12.2013
(51) Int. Cl.: B60W 10/00, B60W 30/00, B62K 11/00, B62K 23/02, B62K 23/04

(54) **Saddle type vehicle with idling stop control**

(30) Priority: 05.04.2013 JP 2013079821
(71) Applicant: Yamaha Hatsudoki Kabushiki Kaisha, Iwata-shi, Shizuoka-ken 438-8501 (JP)
(72) Inventor: Sakai, Kouji, Shizuoka, 438-8501 (JP)
(74) Representative: Zimmermann, Tankred Klaus

(57) **Abstract**

A saddle type vehicle (1) includes an accelerator grip (32) for adjusting an opening degree of a throttle valve (92) of an engine (45), an overstroke detection means (160) for detecting an overstroke operation that is an operation by which the accelerator grip (32) is rotated by not less than a predetermined angle in a closing command direction beyond a fully closing command position, an idling stop control means (111) for automatically stopping the engine (45), a restart control means (112) for restarting the engine (45) in response to the overstroke operation, an overstroke recording means (114) for recording whether or not the overstroke operation is detected when the engine (45) is being automatically stopped, and a restart standby means (115), which, when there is a record of detection of the overstroke operation, puts the restart of the engine (45) on standby until the overstroke detection means (160) no longer detects the overstroke operation.

## Description

### BACKGROUND OF THE INVENTION

### Field of the Invention

The present invention relates to a saddle type vehicle having an engine as a power source.

### 2. Description of the Related Art

Japanese Unexamined Patent Publication No. 11-257123 discloses an engine stop/start controller that automatically stops an engine when a vehicle is stopped and restarts the engine when, in the engine automatic stop state, an accelerator operation is detected with a seat switch being in an on state.

### SUMMARY OF THE INVENTION

It is an object of the present invention to provide an improved saddle type vehicle allowing a start/stop operation while avoiding problems in prior art approaches.

This object is achieved by a saddle type vehicle according to claim 1.

The inventors of the present invention found out that prior art approaches for operating a saddle type vehicle in a start/stop operation have various drawbacks as will be explained now.

With the arrangement of Japanese Unexamined Patent Publication No. 11-257123, it takes a comparatively long time from the accelerator operation until the state is attained where the engine start is completed and the movement of the vehicle can be started, and it may not be possible to make the vehicle start, moving smoothly. For example, when the accelerator is operated, a starter motor rotates in response thereto and the engine is started. The engine speed increases, a centrifugal clutch is put in an engaged state, a driving force is transmitted to the wheels, and the vehicle starts moving. The delay time from the accelerator operation until completion of the series of operations is thus comparatively long, thereby giving rise to a cumbersome sensation during the start of movement.

Moreover, a throttle opens in accordance with the accelerator operation and a complicated engine restart control is thus required to prevent sudden start of movement due to revving of the engine. However, the state of the engine during the start of movement is unstable. Also, the control details must be compatible with the elements (centrifugal clutch, etc.) of each vehicle model. Moreover, after completion of the engine start, the large load variation during the start of movement must be accommodated before the state of the engine stabilizes. The control details during the engine restart are thus inevitably complicated and a process of determining the control details is extremely difficult.

On the other hand, if the vehicle is a vehicle, such as a motorcycle, that can be pushed while walking, there is a possibility for the accelerator to be operated inadvertently while the vehicle is being pushed while walking and the engine may restart against the intention of a driver. Therefore with the arrangement described in Japanese Unexamined Patent Publication No. 11-257123, the above problem is resolved using a seat sensor that detects the seating of the driver. However, by providing the seat sensor, the arrangement is made complicated and high in cost. Further, an arrangement for fault detection of the sensor is also necessary.

Also with the arrangement of Japanese Unexamined Patent Publication No. 11-257123, the engine in the automatic stop state cannot be restarted unless the driver is mounted and there are cases where this is inconvenient. For example, with a saddle type vehicle, there are cases where the driver dismounts from the vehicle and pushes the vehicle while walking. With the arrangement of Japanese Unexamined Patent Publication No. 11-257123, the engine in the automatic stop state does not restart during such pushing while walking. Therefore, a manner of use, where the engine is started in advance during pushing while walking and then after mounting, start of movement is performed immediately by just operating the accelerator grip, is not possible. Also, there are cases where pushing while walking is performed for a long period of time with a headlight being kept lit on a day of poor weather, during nighttime, etc. That is, in such cases, it is desired to move the vehicle safely by improving visibility so that the position of the vehicle can be made known to other drivers, etc., and the engine is put in a running state to prevent the battery voltage from decreasing and thereby disabling subsequent startup.

A first preferred embodiment of the present invention provides a saddle type vehicle including an engine in turn including a throttle valve capable of opening degree adjustment between a fully closed position and a fully open position, an accelerator grip provided on a handle bar in manner enabling rotation in an opening command direction and a closing command direction and being for adjusting the opening degree of the throttle valve, a full closing holding mechanism for holding the accelerator grip at a fully closing command position of commanding full closing of the throttle valve in a state where an operating force is not applied to the accelerator grip and hallowing rotation of the accelerator grip in the closing command direction beyond the fully closing command position when an operating force of not less than a predetermined value in the closing command direction is applied to the accelerator grip, an overstroke detection means for detecting an overstroke operation that is an operation by which the accelerator grip is rotated by not less than a predetermined angle in the closing command direction beyond the fully closing command position, an idling stop control means for automatically stopping the engine when a predetermined idling stop condition is satisfied while the engine is running, a restart control means, which, when a predetermined restart condition is satisfied with the engine being in automatic stop, restarts the engine in response to the overstroke detection means detecting the overstroke operation, an overstroke recording means for recording whether or not the overstroke operation is detected by the overstroke detection means when the idling stop control means automatically stops the engine, and a restart standby means, which, when there is a record of detection of the overstroke operation in the overstroke recording means, puts the restart of the engine by the restart control means on standby until the overstroke detection means no longer detects the overstroke operation.

With the present arrangement, the engine stops automatically when the idling stop condition is satisfied. Wasteful consumption of fuel during a short stop, such as a traffic-light wait, etc., can thereby be suppressed. A driver can perform the overstroke operation of rotating the accelerator grip, provided on the handle bar, by not less than a predetermined angle in the closing command direction beyond the fully closing command position. If the overstroke operation is detected when the engine is automatically stopped and the restart condition is satisfied, the engine is restarted. The overstroke operation is the operation of rotating the accelerator grip in the closing command direction beyond the fully closing command position at which full closing of the throttle valve is instructed. The engine can thus be restarted in the state in which the throttle valve is fully closed. The intake air amount is thus stable when the engine is restarted so that the engine can be restarted reliably and the control for restart does not become complicated.

Also, the throttle valve does not become excessively open when the engine is restarted and therefore unintended revving of the engine and unintended start of movement of the vehicle do not occur. There is thus no need to provide a special arrangement, such as a seat switch for preventing erroneous start of movement, as in the prior art of Japanese Unexamined Patent Publication No. 11-257123. The cost can thus be reduced and there is no need to take measures against a sensor fault. Also, the arrangement is such that erroneous start of movement does not occur even if the restart is performed without the seating of the driver as a condition and restart of the engine during pushing while walking is thus allowed. A user can thus start the engine as necessary during pushing while walking and convenience of the saddle type vehicle can thus be improved. For example, the engine can be put in the running state during pushing while walking to enable the start of movement of the vehicle to be performed immediately after mounting, enable battery consumption to be prevented, etc.

To start movement of the saddle type vehicle after the engine has been restarted by the overstroke operation, the driver turns the accelerator grip in the opening command direction to perform the operation for opening the throttle valve. The operations for restarting the engine and starting the movement of the saddle type vehicle can thus be performed just by operations of the accelerator grip and the operations are thus simple.

Moreover, some amount of time is required from the overstroke operation, which is the operation in the closing command direction, to the operation of the accelerator grip in the opening command direction for making the saddle type vehicle start moving. The restart of the engine is completed and its combustion state stabilizes within this time and therefore a complicated engine control is not required even when the throttle valve is opened to make the saddle type vehicle start moving. That is, a smooth transition to the start of movement of the vehicle, at which the load on the engine changes rapidly, is made possible. Also, the engine is already restarted and in the stable combustion state and therefore when the driver rotates the accelerator grip in the opening command direction, the engine output increases immediately. A cumbersome sensation thus does not arise even during the start of movement.

Further with the first preferred embodiment of the present invention, whether or not the overstroke operation is detected when the engine is automatically stopped is recorded in the overstroke recording means. When there is a record of overstroke operation detection in the overstroke recording means, the restart of the engine is put on standby until the overstroke operation is no longer detected. That is, if the engine is automatically stopped in the state where the driver is performing the overstroke operation, the engine cannot be restarted unless the driver releases the overstroke operation once. When the driver then performs the overstroke operation again, the engine is restarted in response thereto.

Therefore even when the driver performs the overstroke operation unintentionally when the engine is being automatically stopped, the automatically stopped engine will not be restarted immediately. Both fuel consumption suppression by automatic stop of the engine and restart of the engine based on the intention of the driver can thereby be achieved with consistency.

With a second preferred embodiment of the present invention, the saddle type vehicle includes, in place of the overstroke recording means and the restart standby means, an idling stop suspending means, which, if the overstroke detection means detects the overstroke operation when the idling stop condition is satisfied, suspends the automatic stop of the engine by the idling stop control means until a state in which the overstroke detection means does not detect the overstroke operation is sustained for a predetermined time.

With the present arrangement, even if the idling stop condition is satisfied, the automatic engine stop is suspended if the overstroke operation is detected. Specifically, the automatic engine stop is not performed until the state in which the overstroke operation is not detected is sustained for a predetermined time. The idling stop can thereby be suspended by operation of the accelerator grip (overstroke operation). That is, if the driver judges that the automatic engine stop is not necessary, the idling stop can be suspended by the intention of the driver. Moreover, the idling stop can be suspended by the operation of the accelerator grip and the operation is thus simple.

For example, there are cases where, even under circumstances where the engine undergoes automatic stop, restart of the engine becomes necessarily in a short time thereafter. Therefore when the driver foresees the possibility of the need to restart the engine in a short time after the engine undergoes automatic stop, he/she performs the overstroke operation to suspend the automatic stop of the engine. The saddle type vehicle can thus be made to start moving immediately without having to perform the engine restart operation and without waiting for the engine restart. Also, the operations for suspension of engine automatic stop, release of the suspension, and start of movement of the saddle type vehicle can all be performed by operations of the accelerator grip and there is no need for a driver to change operating members from one to another. The operation is thus simple and does not require a special operation means for idling stop suspension and therefore the arrangement is simple and cost can be reduced accordingly.

In a preferred embodiment of the present invention, the saddle type vehicle further includes a transmitting mechanism for mechanically transmitting the rotation of the accelerator grip to the throttle valve and a fully closed stopper for restricting the displacement of the throttle valve in the throttle valve closing direction to the fully closed position even when the accelerator grip is rotated in the closing command direction beyond the fully closing command position.

With this arrangement, even if the overstroke operation of the accelerator grip is performed, the throttle valve is restricted at the fully closed position. There is thus no need to change the design related to the throttle valve.

In a preferred embodiment of the present invention, the saddle type vehicle further includes a throttle opening degree sensor for detecting the opening degree of the throttle valve and a restart prohibiting means, which, even if the overstroke detection means detects the overstroke operation, prohibits the restart of the engine by the restart control means when the throttle opening degree sensor detects an opening degree not less than a predetermined opening degree.

With this arrangement, even if the overstroke operation is detected, the restart of the engine is prohibited when a throttle opening degree not less than the predetermined opening degree is detected. The engine is thereby prevented from restarting in a state where the throttle opening degree is large, and the engine is thus prevented from being revved inadvertently and the saddle type vehicle is prevented from start moving inadvertently. Also, even if the overstroke detection means malfunctions and erroneously detects the overstroke operation, the engine is not restarted inadvertently. There is thus no need to provide a malfunction measure for the overstroke detection means, such as making the overstroke detection means a redundant system, etc. Even if the restart of the engine is prohibited, the engine can be started using an ordinary engine starting means and therefore even if the overstroke detection means malfunctions, the saddle type vehicle can continue to be used.

In a preferred embodiment of the present invention, the saddle type vehicle further includes a brake lever mounted on the handle bar and operated by the driver gripping it together with the accelerator grip.

With this arrangement, the driver may unintentionally perform the overstroke operation in accompaniment with performing the operation of the brake lever when stopping the saddle type vehicle. However, with the arrangement of the first preferred embodiment, even if the overstroke operation is performed when the engine is being automatically stopped, the automatically stopped engine is not restarted immediately. With the arrangement of the second preferred embodiment, on the other hand, the overstroke operation can be performed readily while operating the brake lever and the idling stop suspension operation is made easy.

In a preferred embodiment of the present invention, the engine includes a crankshaft rotatable in a forward rotation direction and a reverse rotation direction and the saddle type vehicle further includes a generator/motor for applying a torque in the forward rotation direction or reverse rotation direction to the crankshaft and for generating electric power upon receiving a rotational force of the crankshaft, and a motor control means, which, during restart of the engine by the restart control means, drives the generator/motor to apply a torque in the reverse rotation direction to the crankshaft and immediately thereafter apply a torque in the forward rotation direction to the crankshaft.

With this arrangement, the generator/motor performs cranking by applying a torque to the crankshaft when the engine is started and generates electric power by receiving the rotational force of the crankshaft while the engine is running. The generated electric power may be used to charge a battery installed in the vehicle.

When the engine in the automatic stop state is to be restarted, the generator/motor performs an operation of applying the torque in the reverse rotation direction to the crankshaft and immediately thereafter applying the torque in the forward rotation direction, that is, performs a swing-back operation. The crankshaft can thereby be rotated beyond a top dead center by making use of the inertia of the crankshaft and oil can be dispersed within the engine to lubricate the interior immediately before cranking. An urging effect due to inertia and a friction reducing effect due to spreading of the oil can thus be utilized to suppress the output torque required of the generator/motor at a low level. For example, even when a crankshaft direct-coupled type motor serving in common as a generator is used as the generator/motor, enlargement of the generator/motor can be avoided.

The restart of the engine is initiated by the overstroke operation by the driver and when the saddle type vehicle is to be made to start moving thereafter, the driver rotates the accelerator grip in the opening command direction opposite to the overstroke operation. There is thus a leeway in time from the restart to the start of f movement of the saddle type vehicle. Therefore before the operation of making the saddle type vehicle move is performed, the engine restart accompanying the swing-back operation can be completed to put the engine in a stable combustion state. That is, the series of operations from the restart of the engine to the start of movement of the saddle type vehicle can be completed without the driver being aware of a restart waiting time. Variation of the throttle opening degree before and after the restart of the engine is suppressed and therefore transition to engine control for start of movement, in which the load changes rapidly, can be performed readily in the state where the combustion inside the engine is stabilized.

The above and other objects, features, and effects of the present invention will become more apparent from the following description of preferred embodiments with reference to the accompanying drawings.

### BRIEF DESCRIPTION OF THE DRAWINGS

FIG. 1 is a schematic side view for describing a motorcycle that is an example of a saddle type vehicle according to a preferred embodiment of the present invention.
FIG. 2 is a perspective view of an arrangement example of a handle of the motorcycle.
FIG. 3 is a horizontal sectional view of a power unit of the motorcycle.
FIG. 4 is a schematic view for describing an arrangement related to an engine provided in the power unit.
FIG. 5 is a sectional view for describing an arrangement related to an opening degree control mechanism for controlling an opening degree of a throttle valve.
FIG. 6 is a side view of the opening degree control mechanism as viewed along a rotation axis of the throttle valve when the throttle is fully closed.
FIG. 7 is a side view of the arrangement of the opening degree control mechanism when the throttle is fully open.
FIG. 8 is a side view of the arrangement of the opening degree control mechanism when an overstroke operation is being performed.
FIG. 9 is a diagram for describing an operation range of an accelerator grip.
FIG. 10 is a block diagram for describing an electrical arrangement, related to control of the engine.
FIG. 11 is a block diagram for describing a functional arrangement of an ECU (electronic control unit) that controls the engine.
FIG. 12 is a flowchart for describing the flow of a process for automatically stopping the engine.
FIG. 13 is a flowchart for describing a specific example of judgment of an automatic stop condition of the engine (step S3 in FIG. 12).
FIG. 14 is a flowchart for describing an example of control for restarting the engine in the automatic stop state.
FIG. 15 is a block diagram for describing an arrangement related to control of an engine in a motorcycle according to another preferred embodiment of the present invention.
FIG. 16 is a flowchart for describing the flow of an engine automatic stop process in the preferred embodiment of FIG. 15.
FIG. 17 is a flowchart for describing the flow of a process for restarting the engine in the automatic stop state in the preferred embodiment of FIG. 15.

### DETAILED DESCRIPTION OF THE PREFERRED EMBODIMENTS

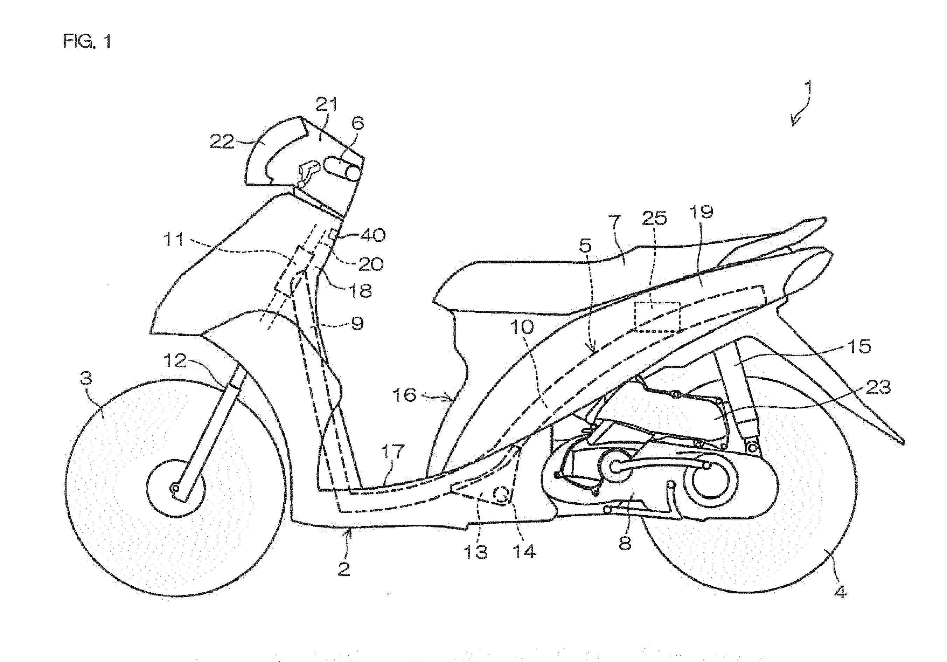

FIG. 1 is a schematic side view for describing an arrangement of a saddle type vehicle according to a preferred embodiment of the present invention. A scooter-type motorcycle 1, which is an example of the saddle type vehicle, is shown in FIG. 1. In the description that follows, for convenience, the respective directions of front/rear, right/left, and up/down of the motorcycle 1 are expressed based on a viewpoint of a rider (driver) riding on the motorcycle 1.

The motorcycle 1 includes a vehicle main body 2, a front wheel 3, and a rear wheel 4. The vehicle main body 2 includes a vehicle body frame 5, a handle 6, a seat 7, and a power unit 8. The vehicle body frame 5 has a down tube 9 disposed in front and a pair of right and left side frames 10 disposed behind the down tube 9. The down tube 9 extends obliquely upward toward the front and a head pipe 11 is fixed to an upper end portion thereof. A steering shaft 20 is rotatably supported by the head pipe 11. A right and left pair of front forks 12 are fixed to a lower end of the steering shaft 20. The handle 6 is mounted on an upper end portion of the steering shaft 20 and the front wheel 3 is rotatably mounted on lower end portions of the front forks 12. Each side frame 10 is curved in a substantially S-like shape and extends obliquely upward toward the rear from a lower end of the down tube 9. The seat 7 is supported by the side frame 10. A bracket 13 is fixed to a vicinity of an intermediate portion of the side frame 10. The power unit 8 is supported by the bracket 13 in a manner enabling swinging in up/down directions via a pivot shaft 14. The power unit 8 is a unit swinging type engine unit. An air cleaner 23 for cleaning the air taken into the engine is disposed above the power unit 8. A cushion unit 15 is disposed across a vicinity of a rear end portion of the side frame 10 and a rear end portion of the power unit 8. The rear wheel 4 is rotatably supported by the rear end portion of the power unit 8.

The vehicle body frame 5 is covered by a vehicle body cover 16 made of resin. The vehicle body cover 16 includes a foot board 17 provided below the front of the seat 7 and providing a footrest portion, a front cover 18 covering the head pipe 11, a side cover 19 covering a region below the seat 7, and a handle cover 21 covering the handle 6. A battery 25 is housed in a space surrounded by the side cover 19 below the seat 7 and is supported by the vehicle body frame 5. A headlight 22 is provided so as to be exposed toward the front from the handle cover 21 and is supported by the handle 6. A main switch 40 for feeding the electric power stored in the battery 25 to the motorcycle 1 is disposed, for example, on a rear surface (surface facing the seat 7) of the front cover 18. The main switch 40 may be a key switch that is operated using a key held by the user.

The seat 7 is arranged to have a saddle shape to enable the driver to be seated. The seat 7 may be arranged so that the driver can be seated in front and a fellow passenger can be seated behind the driver.

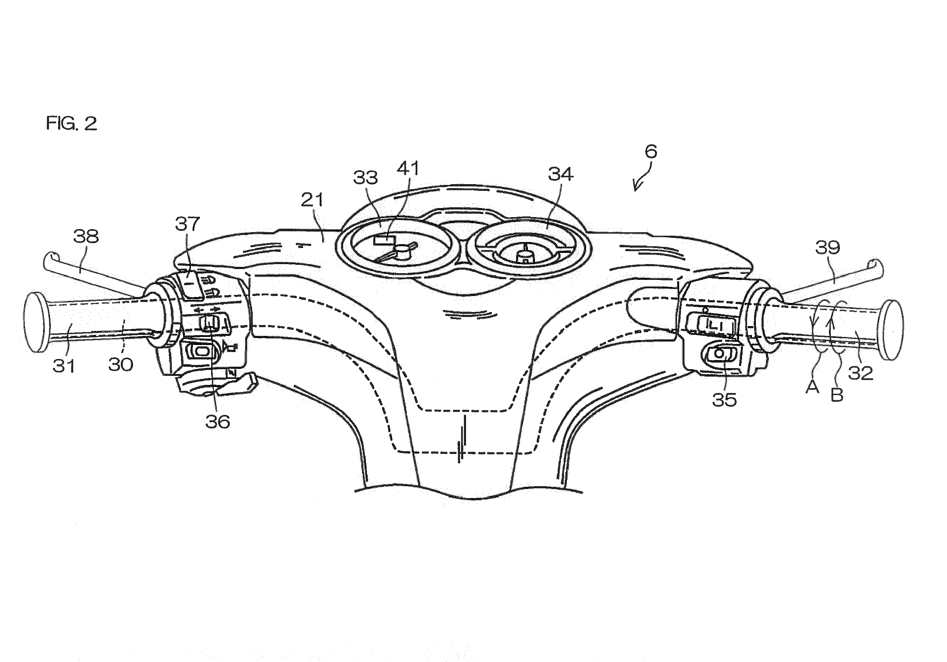

FIG. 2 is a perspective view of an arrangement example of the handle 6 and shows the arrangement as viewed downward by the driver who is seated on the seat 7. The handle 6 includes a handle bar 30 extending to the right and left and grips 31 and 32 respectively disposed at a left end and a right end of the handle bar 30. A rear wheel brake lever 38 for actuating a rear wheel brake is disposed in front of the left grip 31. A front wheel brake lever 39 for actuating a front wheel brake is disposed in front of the right grip 32. The right grip 32 is an accelerator grip for accelerator operation that is mounted in a manner enabling rotation within a predetermined angular range around an axis of the handle bar 30. The handle bar 30 is covered by the handle cover 21. A speedometer 33 and an engine speed meter 34 are provided on the handle cover 21. An indicator 41 is disposed in the speedometer 33. The indicator 41 becomes lit when the engine transitions into an idling stop state by an idling stop control to be described later. A starter button 35 for starting the engine is disposed in a vicinity of the accelerator grip 32. Also, a winker switch 36, a headlight switch 37, etc., are disposed in a vicinity of the left grip 31.

The accelerator grip 32 is provided on the handle bar 30 in a manner enabling rotation in an opening command direction A and a closing command direction B. The opening command direction A is an operation direction for opening a throttle valve of the engine provided in the power unit 8 and, in the present preferred embodiment, is a direction of rotation toward the rear side of the motorcycle 1. By operating the accelerator grip 32 in the opening command direction A, the engine output can be increased to accelerate the motorcycle 1. The closing command direction B is an operation direction for closing the throttle valve of the engine provided in the power unit 8 and is a rotation direction opposite to the opening command direction A. In the present preferred embodiment, the closing command direction B is a direction of rotation toward the front side of the motorcycle 1. By operating the accelerator grip 32 in the closing command direction B, the engine output can be decreased to decelerate the motorcycle 1. When the driver is not applying an operating force to the accelerator grip 32, the accelerator grip 32 is held at a fully closing command position that commands the full closing of the throttle valve. In the present preferred embodiment, when an operating force of not less than a predetermined value is applied toward the closing command direction B, the accelerator grip 32 can be rotated further in the closing command direction B beyond the fully closing command position. The operation of rotating in the closing command direction B by not less than a predetermined angle beyond the fully closing command position is referred to as the "overstroke operation."

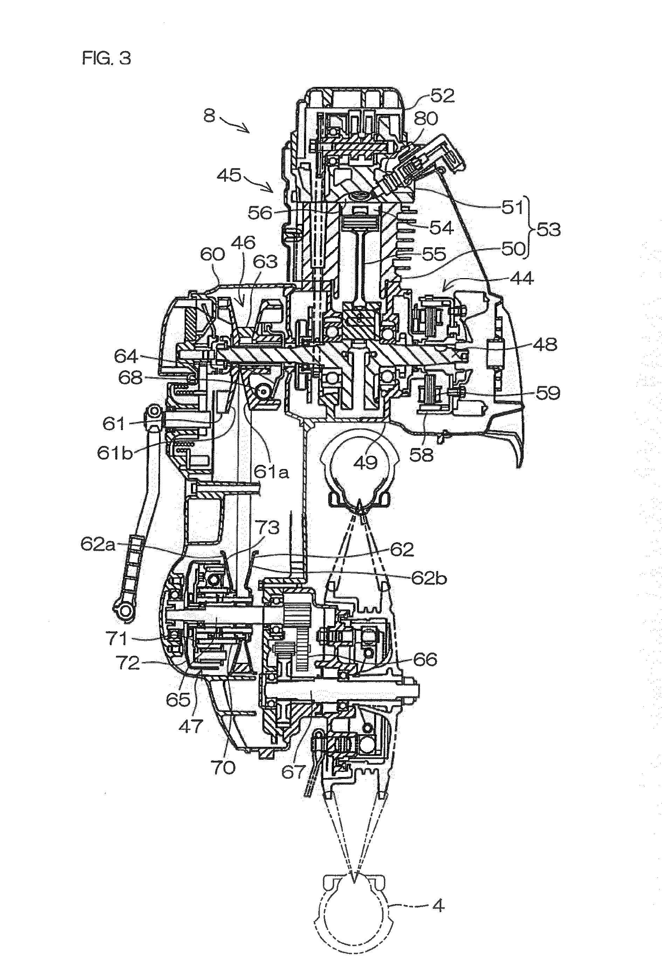

FIG. 3 is a horizontal sectional view of the power unit 8 that shows a cross section as viewed from above with the upper side corresponding to the front of the motorcycle 1 and the lower side corresponding to the rear of the motorcycle 1. The power unit 8 includes a generator/motor 44, the engine 45, a V-belt type continuously variable transmission 46, and a centrifugal clutch 47.

The engine 45 includes a crankshaft 48 extending to the right and left, a crankcase 49 housing the crankshaft 48, a cylinder block 50 extending toward the front from the crankcase 49, a cylinder head 51 fixed to a tip portion of the cylinder block 50. and a head cover 52 fixed to a tip portion of the cylinder head 51. A cylinder 53 is arranged from the cylinder block 50 and the cylinder head 51. A piston 54 is slidably housed inside the cylinder block 50. The piston 54 and the crankshaft 48 are connected by a connecting rod 55. A combustion chamber 56 is defined by the cylinder block 50, the cylinder head 51, and the piston 54.

The generator/motor 44 is disposed at the right side of the crankcase 49. The generator/motor 44 has a rotor 58 coupled to a right end portion of the crankshaft 48 and a stator coil 59 supported by the crankcase 49. By rotation of the crankshaft 48, the rotor 58 rotates around the stator coil 59 and an electromotive force is generated in the stator coil 59. The battery 25 (see FIG. 1) is charged by the electromotive force generated in the stator coil 59. Also, by feeding electricity to the stator coil 59, the rotor 58 generates a torque that makes the crankshaft 48 rotate. Cranking can thereby be performed. The rotor 58 is directly coupled to the crankshaft 48 and rotates integrally with the crankshaft 48. That is, a speed reducing mechanism or clutch, etc., is not interposed between the rotor 58 and the crankshaft 48. The crankshaft 48 is rotatable in a forward rotation direction and a reverse rotation direction. The generator/motor 44 can provide a forward rotation direction torque and a reverse rotation direction torque to the crankshaft 48.

The V-belt type continuously variable transmission 46 includes a transmission case 60, a drive pulley 61, a driven pulley 62, and a V-belt 63 wound around the pulleys. The drive pulley 61 is mounted on a left end portion of the crankshaft 48. The driven pulley 62 is mounted on a main shaft 65 in a manner enabling rotation around the main shaft 65. More specifically, the driven pulley 62 includes a movable pulley member 62a that changes in position in regard to the axial direction of the main shaft 65 and a fixed pulley member 62b that does not change in position in regard to the axial direction. Both pulley members 62a and 62b are rotatable with respect to the main shaft 65. The main shaft 65 is rotatably held inside the transmission case 60. The rotation of the main shaft 65 is transmitted via a gear mechanism 66 to a rear wheel shaft 67. The rear wheel shaft 67 is rotatably supported by the transmission case 60. The rear wheel 4 is fixed to the rear wheel shaft 67.

The rotation of the driven pulley 62 is transmitted to the main shaft 65 via the centrifugal clutch 47. The centrifugal clutch 47 includes a primary rotor 71 rotatably supported by the main shaft 65 and a secondary rotor 72 couplcd to the main shaft 65 and serving as a clutch plate that rotates together with the main shaft 65. The secondary rotor 72 has a cylindrical portion surrounding the primary rotor 71. The driven pulley 62 is coupled to the primary rotor 71 and the primary rotor 71 rotates together with the driven pulley 62. However, the movable pulley member 62a is made displaceable along the axial direction of the main shaft 65 and a compression coil spring 70 is interposed between the movable pulley member 62a and the primary rotor 71. Also, the primary rotor 71 includes a shoe 73. The shoe 73 is arranged to contact the inner surface of the cylindrical portion of the secondary rotor 72 when the rotation speed of the primary rotor 71 increases to a predetermined speed. Therefore, when the rotation speed of the driven pulley 62 increases, the shoe 73 contacts the secondary rotor 72 and the rotation of the driven pulley 62 is thereby transmitted to the main shaft 65 via the centrifugal clutch 47 and a driving force is applied to the rear wheel 4.

The driving pulley 61 includes a movable pulley member 61 a disposed in the crankcase 49 and a fixed pulley member 61b disposed at a far side from the crankcase 49. With respect to the crankshaft 48, the movable pulley member 61a is displaceable in the axial direction of the crankshaft 48 and is coupled so as to rotate together with the crankshaft 48. The fixed pulley member 61b is fixed to the crankshaft 48 and rotates together with the crankshaft 48 in a state of not becoming displaced in the axial direction of the crankshaft 48. A holder plate 64 is fixed to the crankshaft 48 at the crankcase 49 side with respect to the movable pulley member 61a. A roller 68 is disposed between the holder plate 64 and the movable pulley member 61a. When the rotation speed of the crankshaft 48 is low, the roller 68 is positioned near a rotation center and the movable pulley member 61a is accordingly positioned near the crankcase 49. On the other hand, as the rotation speed of the crankshaft 48 increases, the roller 68 is separated from the rotation center due to a centrifugal force and pushes and moves the movable pulley member 61a closer to the fixed pulley member 61 b.

When the rotation speed of the crankshaft 48, that is, the engine speed is low and the interval between the movable pulley member 61a and the fixed pulley member 61b is wide, the V-belt 63 is positioned at a small-diameter position close to the crankshaft 48. Accordingly, at the driven pulley 62, the V-belt 63 is positioned at a large diameter position away from the main shaft 65. This state is shown in FIG. 3. In this state, the rotation speed of the driven pulley 62 is low and the centrifugal clutch 47 is thus maintained in a disengaged state. As the engine speed increases, the roller 68 is displaced in the direction of separating from the crankshaft 48 by the centrifugal force, the movable pulley member 61a is thereby made to approach the fixed pulley member 61b, and the V-belt 63 thus moves to a large-diameter position of the driving pulley 61. Accordingly at the driven pulley 62, the V-belt 63 spreads the interval between the movable pulley member 62a and the fixed pulley member 62b against the spring force of the compression coil spring 70 and moves toward a small diameter position. Consequently, the rotation speed of the driven pulley 62 increases and therefore the centrifugal clutch 47 transitions into an engaged state and a state where the driving force of the engine 4 is transmitted to the rear wheel 4 is entered. The centrifugal clutch 47 is thus a rotation speed response clutch that is put in the engaged state in response to the engine speed. The minimum engine speed at which the centrifugal clutch 47 is put in the engaged state is referred to as the "transmission rotation speed."

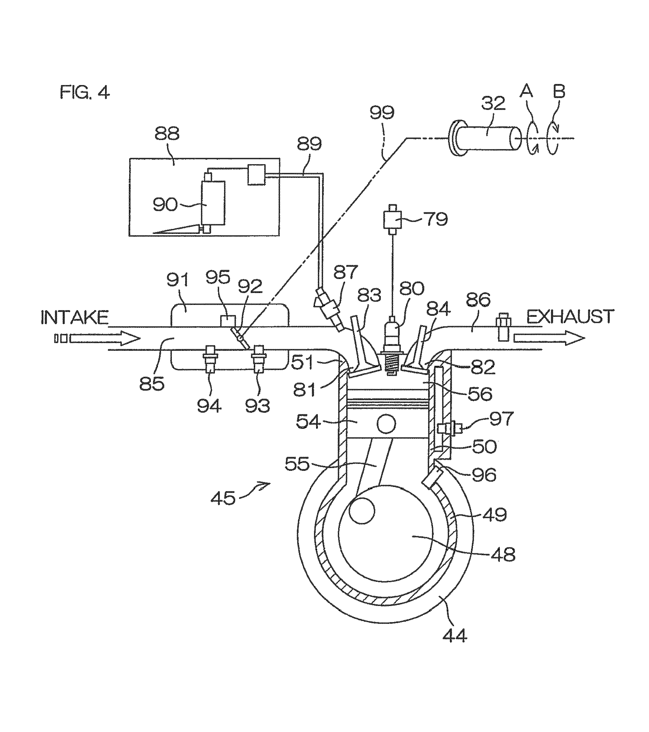

FIG. 4 is a schematic view for describing an arrangement related to the engine 45. An air inlet 81 and an exhaust outlet 85 both facing the combustion chamber 56 are formed in the cylinder head 51. Further, an ignition plug 80 is disposed in the cylinder head 51 so as to face the combustion chamber 56. An intake valve 83 is disposed at the air inlet 81 and an exhaust valve 84 is disposed at the exhaust outlet 85. The intake valve 83 opens and closes the air inlet 81 and the exhaust valve 84 opens and closes the exhaust outlet 82. The intake valve 83 and the exhaust valve 84 are driven by a valve gear (not shown) that operates in linkage with the crankshaft 48. The air inlet 81 is in communication with an intake port 85 and the exhaust outlet 82 is in communication with an exhaust port 86.

In the present preferred embodiment, the engine 45 is a fuel injection type engine. That is, at the intake port 85, an injector 87 is disposed at an upstream side relative to the intake valve 83. The injector 87 is disposed to inject fuel toward the air inlet 81. Fuel from a fuel tank 88 is supplied via a fuel hose 89 to the injector 87. A fuel pump 90 is disposed inside the fuel tank 88. The fuel pump 90 pressure-feeds the fuel inside the fuel tank 88 to the fuel hose 89.

At the intake port 85, a throttle body 91 is disposed at an upstream side relative to the injector 87. The throttle body 91 holds a throttle valve 92, an intake pressure sensor 93, an intake temperature sensor 94, and a throttle opening degree sensor 95. The throttle valve 92 may, for example, be a butterfly valve that includes a plate-like valve element rotatably disposed inside the intake port 85.

In the present preferred embodiment, the throttle valve 92 is mechanically coupled to the accelerator grip 32 via an accelerator cable 99 made from a Bowden cable, etc. The accelerator cable 99 is an example of a transmitting mechanism that mechanically transmits the rotation of the accelerator grip 32 to the throttle valve 92. When the accelerator grip 32 is operated, the throttle valve 92 undergoes displacement (angular displacement in the present preferred embodiment) in accordance with the operation direction and operation amount to change the throttle opening degree. The position of the throttle valve 92 is detected by the throttle opening degree sensor 95. The throttle valve 92 and the accelerator grip 32 are mechanically connected and therefore in the present embodiment, the throttle opening degree sensor 95 does not only detect the throttle opening degree but also functions as an accelerator operation detection portion that detects the accelerator opening degree as an accelerator command value. The accelerator opening degree is the operation amount of the accelerator grip 32. The intake pressure sensor 93 detects the pressure of air taken in. The intake temperature sensor 94 detects the temperature of the air taken in.

A crank angle sensor 96 for detecting the rotation angle of the crankshaft 48 is mounted on the crankcase 49. Also, an engine temperature sensor 97 for detecting the temperature of the engine 45 is mounted on the cylinder block 50.

As described above, the accelerator grip 32 can be rotated in the opening command direction A and the closing command direction B. When the driver is not applying an operating force on the accelerator grip 32, the accelerator grip 32 is at the predetermined fully closing command position and in this state, the throttle valve 92 is in a fully closed state. When from this state, the driver operates the accelerator grip 32 in the opening command direction A, the opening degree of the throttle valve 92 increases and the intake amount increases. The fuel injection amount of the injector 87 is increased accordingly. The engine speed is thereby increased. On the other hand, when the driver rotates the accelerator grip 32 in the closing command direction B, the opening degree of the throttle valve 92 decreases and the intake amount decreases. The fuel injection amount of the injector 87 is decreased accordingly. The engine speed is thereby decreased.

Even when the overstroke operation, with which the accelerator grip 32 is rotated by a predetermined angle further in the closing command direction B beyond the fully closing command position, is performed, the throttle valve 92 is maintained at the fully closed position.

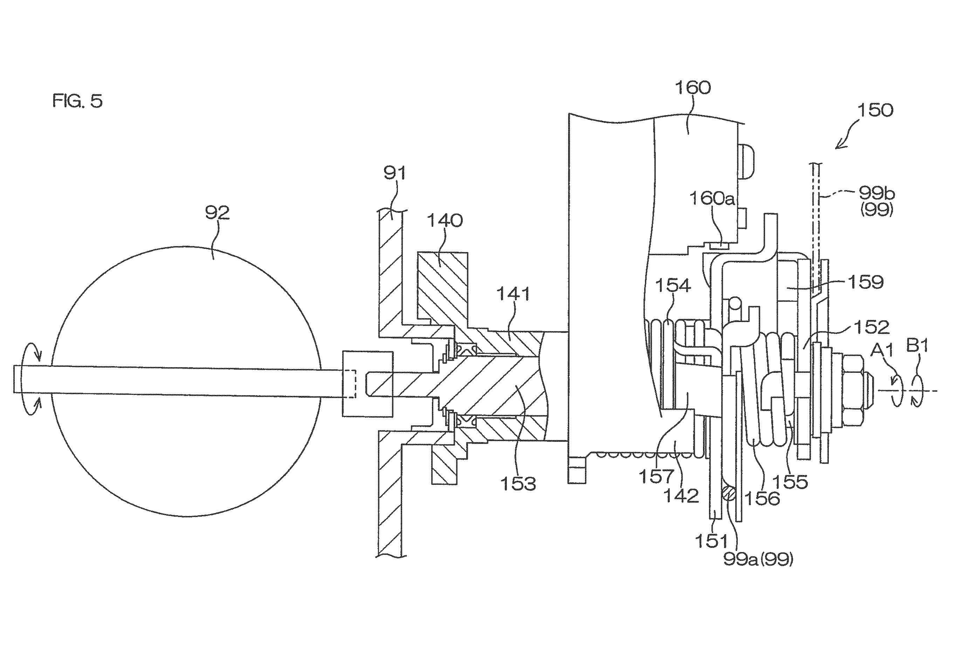

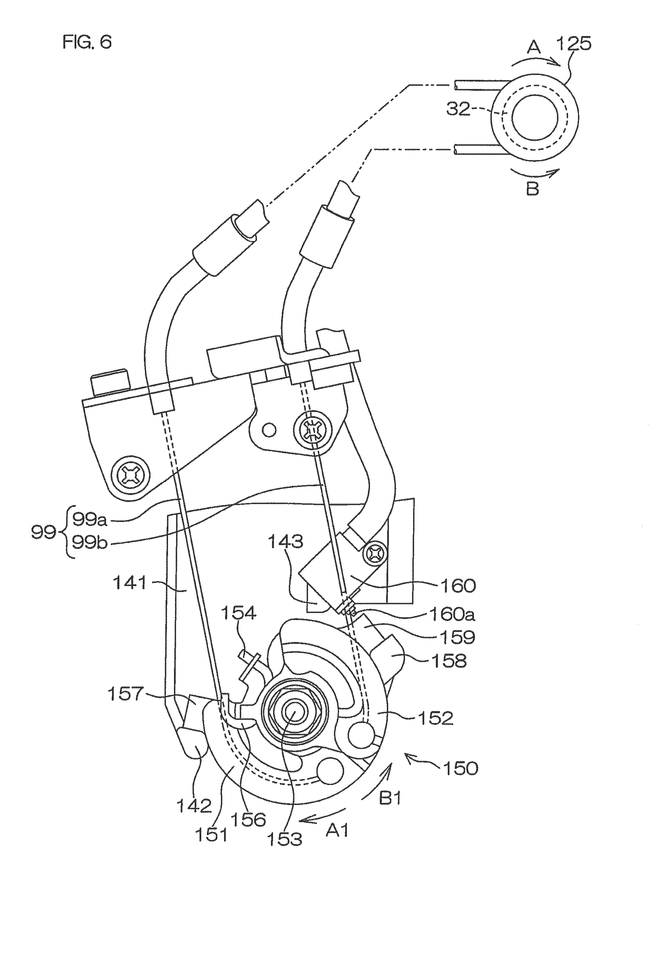

FIG. 5 is a sectional view for describing an arrangement related to an opening degree control mechanism for controlling the opening degree of the throttle valve. FIG. 6 is a side view of the opening degree control mechanism as viewed along the rotation axis of the throttle valve.

A frame 140 is coupled to the throttle body 91, and the opening degree control mechanism 150 is supported by the frame 140. The opening degree control mechanism 150 is arranged to operate in linkage with the accelerator grip 32 by the accelerator cable 99. The accelerator cable 99 includes an opening command cable 99a transmitting an operating force in the opening command direction A of the accelerator grip 32 and a closing command cable 99b transmitting an operating force in the closing command direction B of the accelerator grip 32, and these are coupled to a drive pulley 125 that rotates together with the accelerator grip 32. The opening degree control mechanism 150 includes a first pulley 151 coupled to the opening command cable 99a and a second pulley 152 coupled to the closing command cable 99b. The first pulley 151 and the second pulley 152 are supported by a supporting shaft 153. The first pulley 151 is coupled to the supporting shaft 153 such that relative rotation therebetween is disabled, and the second pulley 152 is coupled to the supporting shaft 153 in a relatively rotatable manner. The supporting shaft 153 is coupled to the frame 140 in a manner enabling rotation around its axis. The rotation of the supporting shaft 153 is transmitted to the throttle valve 92. The supporting shaft 153 and the throttle valve 92 may be coupled directly as shown in FIG. 5 or may be coupled via a gear mechanism.

The supporting shaft 153 is inserted in a boss 141 provided on the frame 140 and is freely rotatable. A first coil spring 154 is wound around the boss 141. One end of the first coil spring 154 is coupled to the frame 140 and the other end thereof is coupled to the first pulley 151. The first coil spring 154 generates an elastic force so as to rotate the first pulley 151 in a closing direction B1. On the other hand, the second pulley 152 is rotatably supported by the supporting shaft 153 via a bushing 155. A second coil spring 156 is wound around the bushing 155. One end of the second coil spring 156 is coupled to the first pulley 151 and the other end thereof is coupled to the second pulley 152.

To restrict the rotation range of the first pulley 151 between a fully closed position and a fully open position respectively corresponding to the fully closed position and the fully open position of the throttle valve 92, the frame 140 is provided with a fully closed stopper 142 and a fully open stopper 143. The first pulley 151 has a lever 157 projecting in a radial direction. When an operating force is not acting on the accelerator grip 32, the first coil spring 154 urges the first pulley 151 in the closing direction B1 and the first pulley 151 is thereby restricted at the fully closed position at which the lever 157 contacts the fully closed stopper 142. This state is shown in FIG. 6.

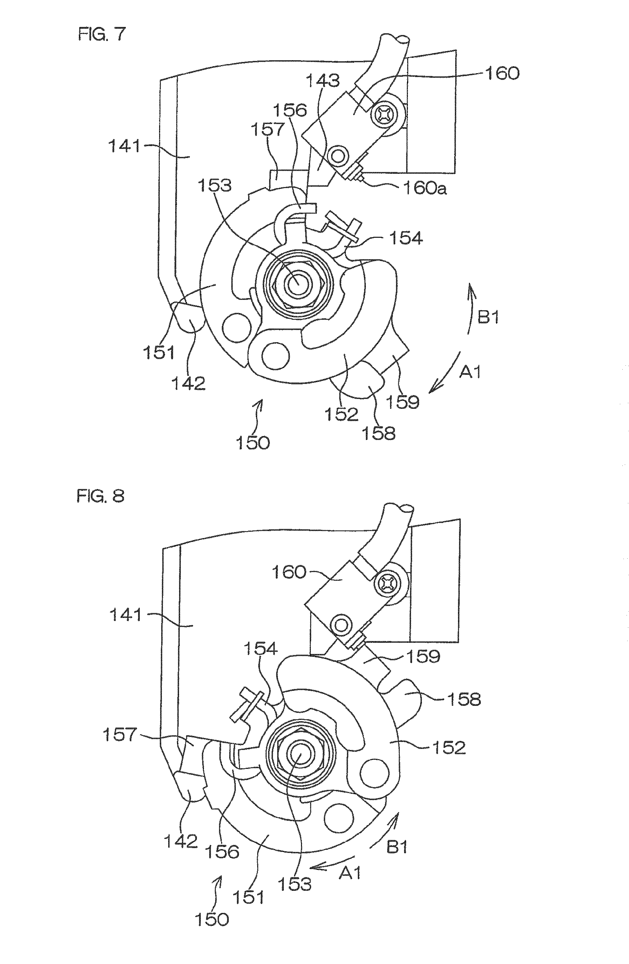

As the accelerator grip 32 is rotatingly operated in the opening command direction A, the first pulley 151 rotates in the opening direction A1 and becomes restricted at the fully open position at which the lever 157 contacts the fully open stopper 143. This state is shown in FIG. 7 (in which the illustration of the accelerator cable 99 is omitted). When the first pulley 151 rotates in the opening direction A1, the second pulley 152 is rotated together via the second coil spring 156. The first coil spring 154 deforms elastically in this process. Therefore, when the driver weakens the operating force on the accelerator grip 32, the first pulley 151 is rotated in the closing direction B1 by the restoring force of the first coil spring 154. When the first pulley 151 rotates in the closing direction B1, a pressing portion 158 formed on the first pulley 151 presses a switch operating lever 159, formed on the second pulley 152, in the closing direction B1. The second pulley 152 thereby receives a force in the closing direction B1 from the first pulley 151 and is rotated in the closing direction B1. The rotations of the first and second pulleys 151 and 152 in the closing direction B1 are restricted by the lever 157 contacting the fully closed stopper 142. Therefore in the state where the driver is not applying an operating force on the accelerator grip 32. the lever 157 of the first pulley 151 is pressed against the fully closed stopper 142 by the elastic force of the first coil spring 154 and the throttle valve 92 is thereby maintained at the fully closed position. At the same time, the rotation of the first pulley 151 is transmitted to the accelerator grip 32 by the accelerator cable 99 and the accelerator grip 32 is thus maintained at the fully closing command position.

On the other hand, when the overstroke operation is performed on the accelerator grip 32 when the first pulley 151 is at the fully closed position, that is, when the throttle valve 92 is fully closed, the operating force is transmitted to the second pulley 152 from the closing command cable 99b. The second pulley 152 is thereby rotated in the closing direction B1 while elastically deforming the second coil spring 156 in the state where the rotation of the first pulley 151 in the closing direction B1 is restricted by the fully closed stopper 142. The switch operating lever 159 is thereby separated from the pressing portion 158 and is displaced toward the closing direction B1. An operator 160a of an overstroke detection switch 160 is disposed in the movement path of the switch operating lever 159. More specifically, if a reference position is defined as the position of the second pulley 152 when an operating force is not applied to the accelerator grip 32, the state of the overstroke detection switch 160 is switched by the second pulley 152 rotating by not less than a predetermined angle in the closing direction B1 from the reference position and the switch operating lever 159 thereby operating the operator 160a as shown in FIG. 8 (in which the illustration of the accelerator cable 99 is omitted). Therefore, when the accelerator grip 32 is operated by not less than the predetermined angle in the closing command direction B from the fully closing command position, the state of the overstroke detection switch 160 is switched. The overstroke operation is thereby detected.

When from the overstroke operation state, the operating force on the accelerator grip 32 is released, the second pulley 152 is rotated in the opening direction A1 and returned to the reference position by the restoring force of the second coil spring 156. This rotation of the second pulley 152 is transmitted to the accelerator grip 32 by the closing command cable 99b and the accelerator grip 32 is thus returned to the fully closing command position.

The opening degree control mechanism 150 thus functions as a full closing holding mechanism of the present invention.

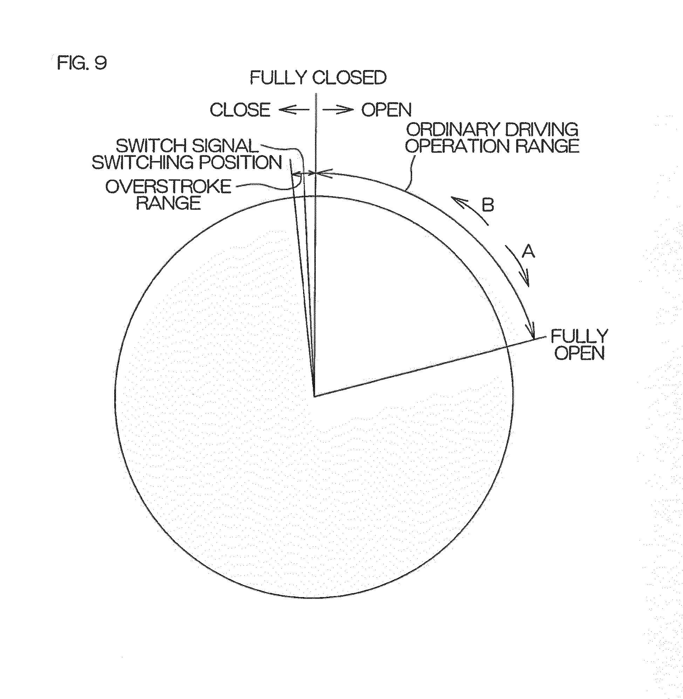

FIG. 9 is a diagram for describing an operation range of the accelerator grip 32. The accelerator grip 32 can be rotatingly operated in the opening command direction A and the closing command direction B within an ordinary driving operation range between the fully closing command position and the fully opening command position. The fully closing command position is the rotation position of the accelerator grip 32 that is defined by the first pulley 151 of the opening degree control mechanism 150 being restricted at the fully closed position by the fully closed stopper 142. The fully opening command position is the rotation position of the accelerator grip 32 that is defined by the first pulley 151 of the opening degree control mechanism 150 being restricted at the fully open position by the fully open stopper 143.

The accelerator grip 32 can be rotatingly operated further in the closing command direction B beyond the fully closing command position. When the rotation operation of passing beyond the fully closing command position by the predetermined angle in the closing command direction B, that is, the overstroke operation is performed, the switch operating lever 159 of the second pulley 152 of the opening degree control mechanism 150 operates the operator 160a of the overstroke detection switch 160. The switch signal output by the overstroke detection switch 160 is thereby switched and the overstroke operation is detected.

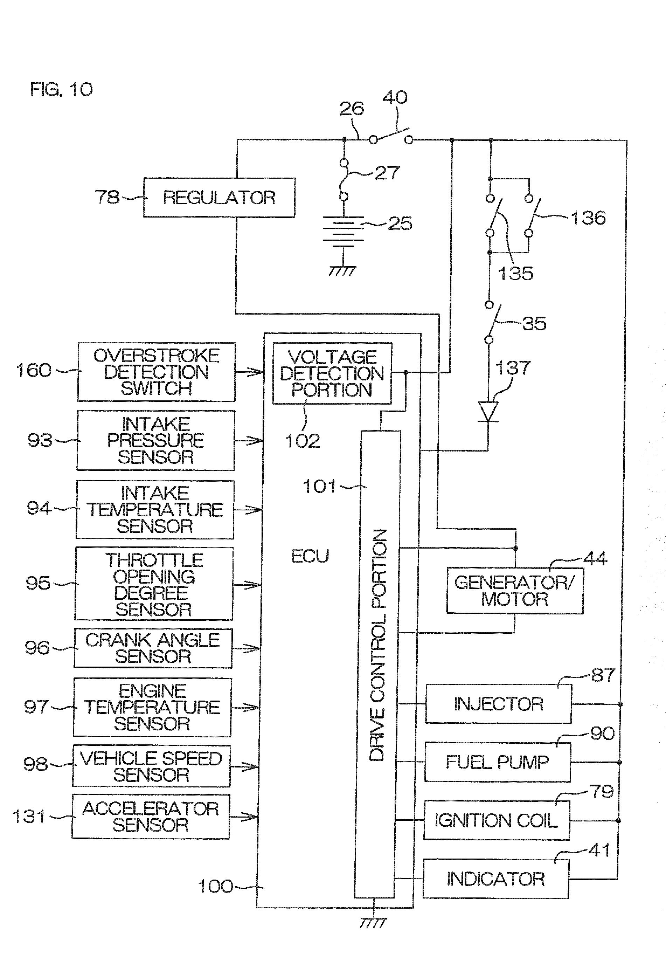

FIG. 10 is a block diagram for describing an electrical arrangement related to control of the engine 45. The outputs of the sensors 93 to 97 are input into an ECU (electronic control unit) 100. Other sensors, such as a vehicle speed sensor 98, an acceleration sensor 131, etc., may also be connected as necessary to the ECU 100. The vehicle speed sensor 98 is a sensor that detects the vehicle speed of the motorcycle 1 and may be a wheel speed sensor that detects the rotation speeds of the wheels 3 and 4. The acceleration sensor 131 is a sensor that detects the acceleration of the motorcycle 1. The overstroke detection switch 160 for detecting the overstroke operation by the driver is also connected to the ECU 100.

Based on the output signals of the sensors 93 to 97, the ECU 100 drives the fuel pump 90 and the injector 87 and thereby controls the fuel injection amount and fuel injection timing. An ignition coil 79 is further connected to the ECU 100. The ignition coil 79 stores electric power for causing spark discharge of the ignition plug 80 (see FIG. 4). The ECU 100 controls the feeding of electricity to the ignition coil 79 based on the output signals of the sensors 93 to 97 and thereby controls the ignition timing (discharge timing of the ignition plug 80).

Further, the ECU 100 controls the feeding of electricity to the generator/motor 44 and thereby controls the start of the engine 45.

The battery 25 is connected to a feed line 26 via a fuse 27. The electric power stored in the battery 25 is supplied via the feed line 26 to the generator/motor 44. the ECU 100, the ignition coil 79, the injector 87, the fuel pump 90, the indicator 41, etc. Also, electric power generated by the generator/motor 44 and rectified and regulated by a regulator 78 is supplied to the battery 25 and the battery 25 is thereby charged while the engine 45 is running.

The main switch 40 is interposed in the feed line 26. In the feed line 26. a parallel circuit of brake switches 135 and 136 are connected to the main switch 40 at the opposite side of the battery 25. The brake switch 135 is a switch that is made conductive when the rear wheel brake lever 38 is operated and is interrupted when the rear wheel brake lever 38 is not operated. Similarly, the brake switch 136 is a switch that is made conductive when the front wheel brake lever 39 is operated and is interrupted when the front wheel brake lever 39 is not operated. A starter button 35 is connected in series with respect to the parallel circuit of the brake switches 135 and 136, a diode 137 is connected in series to the starter button 35. and further, the ECU 100 is connected to the diode 137. The generator/motor 44 is connected to the ECU 100. When the starter button 35 is operated to be on in the state where the rear wheel brake lever 38 or the front wheel brake lever 39 is operated, the ECU 100 feeds the electric power of the battery 25 to the motor/generator 44.

In the feed line 26, the ECU 100, ignition coil 79, injector 87, fuel pump 90. indicator 41, etc., are connected to the main switch 40 at the opposite side of the battery 25. That is, when the main switch 40 is made conductive, electricity is fed to the ECU 100 and control operations by the ECU 100 are started.

A voltage detection portion 102 that detects the voltage (battery voltage) supplied from the feed line 26 is incorporated in the ECU 100. The ECU 100 further includes a drive control portion 101 for driving actuators of the ignition coil 79, injector 87, fuel pump 90, generator/motor 44, indicator 41, etc. The drive control portion 101 includes a drive circuit for feeding electricity to the actuators. In particular, the drive control portion 101 includes a motor drive circuit that performs forward rotation drive and reverse rotation drive of the generator/motor 44. The ECU 100 can actuate the motor/generator 44 even when the starter button 35 is off to perform cranking of the engine 45.

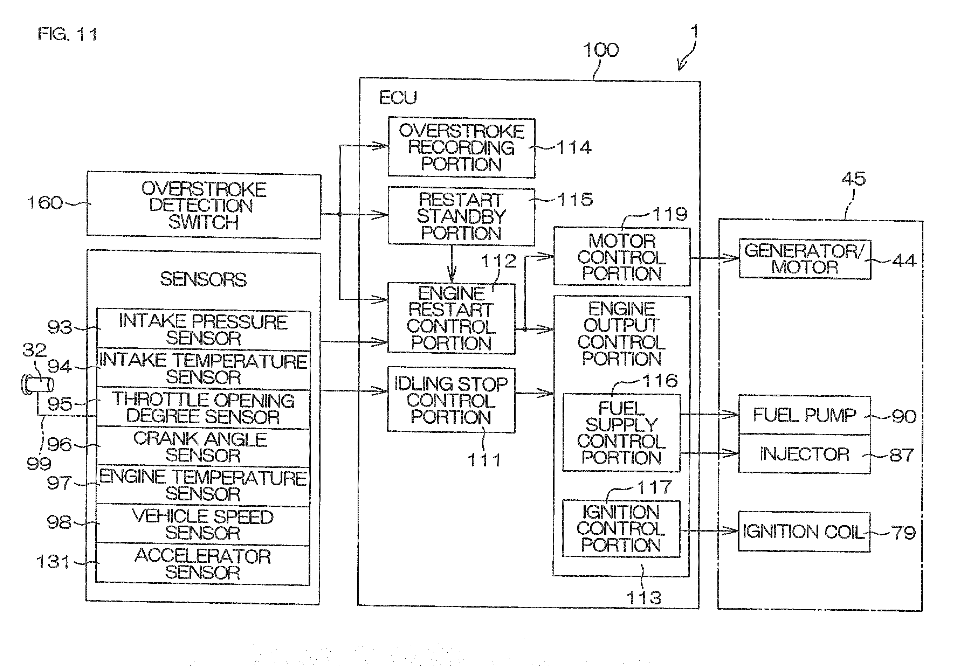

FIG. 11 is a block diagram for describing a functional arrangement of the ECU 100. The ECU 100 has a computer incorporated therein and the respective functions of the plurality of functional processing portions described below are realized by the computer executing a program.

That is, the ECU 100 includes, as functional processing portions, an idling stop control portion 111, an engine restart control portion 112, an engine output control portion 113, an overstroke recording portion 114, a restart standby portion 115, and a motor control portion 119.

The engine output control portion 113 controls the output of the engine 45. Specifically, the engine output control portion 113 includes a fuel supply control portion 116 and an ignition control portion 117. The fuel supply control portion 116 controls the fuel pump 90 and the injector 87 to control the fuel injection amount and the fuel injection timing. The ignition control portion 117 controls the feeding of electricity to the ignition coil 79 to control the spark discharge timing (ignition timing) of the ignition plug 80. The output of the engine 45 can be controlled by controlling either or both of the fuel injection amount and the ignition timing. Also, the engine 45 can be stopped by setting the fuel injection amount to zero and thereby cutting off the fuel.

The idling stop control portion 111 stops the engine 45 and makes it transition into an idling stop state when a predetermined idling stop condition is satisfied while the engine 45 is in an idling state. The idling state refers to a state where the throttle opening degree is fully closed and the engine speed is of a value within an idling rotation speed range (for example, not more than 2500rpm). The idling stop state refers to a state where the running of the engine 45 is automatically stopped by control by idling stop control portion 111. Specifically, the idling stop control portion 111 provides a fuel cutoff command to the engine output control portion 113 to stop the supply of fuel to the engine 45 and thereby stop the engine 45.

The engine restart control portion 112 monitors the output of the overstroke detection switch 160 while the engine 45 is in the idling stop state. When the overstroke detection switch 160 detects the overstroke operation, the engine 45 is restarted in response thereto. The restart refers to the start of the engine 45 in the idling stop state (automatic stop state). Specifically, the engine restart control portion 112 makes the motor control portion 119 control the drive control portion 101 to actuate the generator/motor 44 and provides fuel supply control and ignition control commands to the engine output control portion 113. The generator/motor 44 is thereby actuated, fuel is injected from the injector 87, spark discharge by the ignition coil 79 is performed, and the engine 45 is restarted.

The overstroke recording portion 114 records whether or not the overstroke operation is detected by the overstroke detection switch 160 when the idling stop control portion 111 performs automatic stop of the engine 45.

The restart standby portion 115 judges whether or not there is a record of the overstroke operation detection in the overstroke recording portion 114. If there is a record of the overstroke operation, the restart standby portion 115 disables the function of the engine restart control portion 112 until the overstroke operation is no longer detected by the overstroke detection switch 160 after the engine 45 has been put in the idling stop state. Therefore, if the driver performs the overstroke operation when the idling stop control portion 111 automatically stops the engine 45, the restart of the engine 45 in response to the overstroke operation is not performed after transition of the engine 45 into the idling stop state until after the overstroke operation is released once.

Upon receiving a restart command from the engine restart control portion 112. the motor control portion 119 actuates the generator/motor 44 to perform cranking of the engine 45. In this process, the motor control portion 119 performs a swing-back operation of making a torque in the reverse rotation direction be generated from the generator/motor 44 to make the crankshaft 48 rotate in the reverse rotation direction by a predetermined angle and thereafter makes a torque in the forward rotation direction be generated from the generator/motor 44 to start cranking.

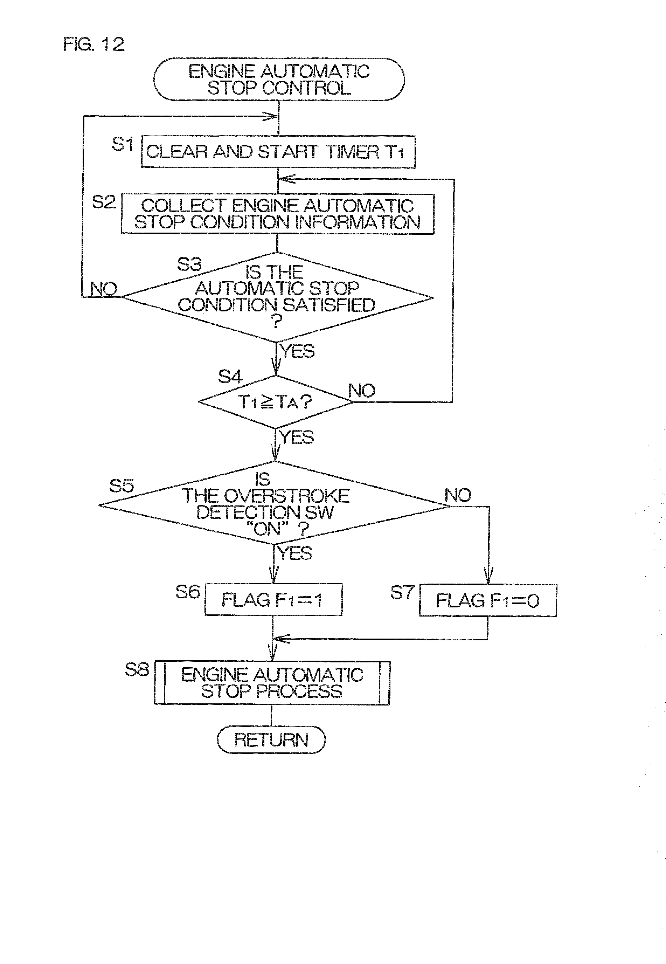

FIG. 12 is a flowchart for describing the flow of a process for automatically stopping the engine 45 by means of the idling stop control portion 111. The process is repeatedly executed by the ECU 100 at every control cycle while the engine 45 is running.

The idling stop control portion 111 clears and starts a timer T1 for measuring the duration of sustenance of the automatic stop condition for automatically stopping the engine (step S1). The idling stop control portion 111 then collects information for judging the automatic stop condition (step S2). Based on the collected information, the idling stop control portion 111 judges whether or not the automatic stop condition is satisfied (step S3). If the automatic stop condition is satisfied (step S3: YES), the idling stop control portion 111 references the measured time of the timer T1 and compares the measured time with a predetermined time TA (for example, 3 seconds)

(step S4). If the measured time of the timer T1 is less than the predetermined time TA (step S4: NO), a return to step S2 is performed and satisfaction/non-satisfaction of the automatic stop condition is checked (steps S2 and S3). If the automatic stop condition stops being satisfied before the predetermined time TA elapses (step S3: NO), a return to step S1 is performed and the time measurement by the timer T1 is restarted.

If the state in which the automatic stop condition is satisfied is sustained for the predetermined time TA (step S4: YES), the overstroke recording portion 114 references the output of the overstroke detection switch 160 (step S5). If the overstroke detection switch 160 detects the overstroke operation (for example, if the overstroke detection switch 160 is on) (step S5: YES), the overstroke recording portion 114 sets a flag F1 to "1" (step S6). On the other hand, if the overstroke detection switch 160 is not detecting the overstroke operation (step S5: NO), the overstroke recording portion 114 sets the flag F1 to "0" (step S7). That is, the overstroke recording portion 114 records whether or not the overstroke operation is detected in the flag F1.

Thereafter, the idling stop control portion 111 performs a process for automatically stopping the engine 45 (step S8). That is, the idling stop control portion 111 stops the supply of fuel to the engine 45 and stops the fuel injection control and injection control.

In the present preferred embodiment, the idling stop condition is that the state in which the automatic stop condition is satisfied is sustained for the predetermined time TA. In the idling stop state, the ECU 100 makes the indicator 41 be lit.

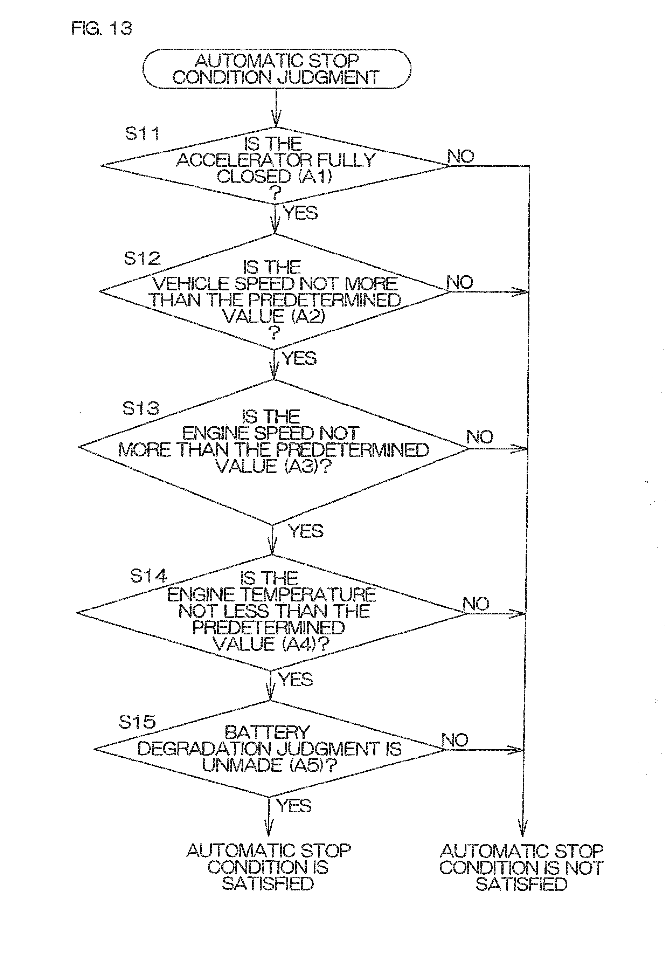

FIG. 13 is a flowchart for describing a specific example of the judgment of the automatic stop condition (step S3 in FIG. 12). The idling stop control portion 111 judges whether or not all of the following conditions A1 to A5 are satisfied (steps S11 to S15).

Condition A1: The accelerator grip 32 is at the fully closed position. This is a condition for confirming that the driver has no intention of transmitting the driving force of the engine 45 to the rear wheel 4, which is the drive wheel. In the present preferred embodiment, the accelerator grip 32 and the throttle valve 92 are mechanically linked by the accelerator cable 99 and therefore if the throttle opening degree sensor 95 detects that the throttle valve 92 is fully closed, this means that the accelerator grip 32 is at the fully closing command position.

Condition A2: The vehicle speed is not more than a predetermined value (for example, 3km/h). This is a condition for confirming that the motorcycle 1 is stopped. Specifically, the condition is that the vehicle speed sensor 98 is detecting a vehicle speed not more than the predetermined value.

Condition A3: The engine speed is not more than a predetermined value (for example, 2500rpm). This is a condition for confirming that the engine speed is in the idling rotation speed range. The ECU 100 calculates the engine speed, for example, based on a generation cycle of crank pulses output by the crank angle sensor 96.

Condition A4: The engine temperature is not less than a predetermined value (for example, 60°C). This is a condition for confirming that the engine 45 is sufficiently warmed up and is in a state of being capable of restarting readily even if running is stopped. The idling stop control portion 111 makes the judgment related to the engine temperature based on the output signal of the engine temperature sensor 97.

Condition A5: The battery is not degraded. A state in which the battery is degraded refers to a state in which the battery 25 cannot supply electric power sufficient to start the engine 45 with some leeway to the generator/motor 44. That is, not only a case where the performance of the battery 25 is degraded due to aging, etc., but a case where the output voltage of the battery 25 is lowered due to discharge is also included in the state in which the battery 25 is degraded. The degradation of the battery 25 can be judged based on the output voltage of the battery 25 that is detected by the voltage detection portion 102 (see FIG. 10).

When all of the conditions A1 to A5 are satisfied (YES in all of steps S11 to S15), the idling stop control portion 111 judges that the automatic stop condition is satisfied (YES in step S3 of FIG. 12). If at least one of the conditions of the conditions A1 to A5 is not satisfied (NO in any of the steps S11 to S 15), the idling stop control portion 111 judges that the automatic stop condition is not satisfied (NO in step S3 of FIG. 12).

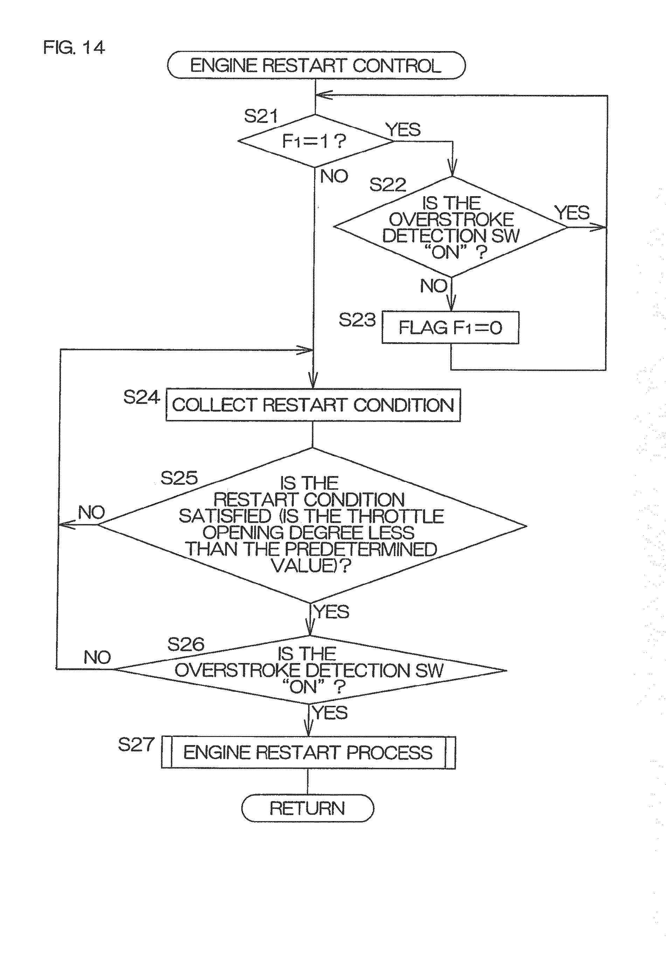

FIG. 14 is a flowchart for describing a flow of a process for restarting the engine 45 that is in the automatic stop state. The process is repeatedly executed by the ECU 100 at every control cycle when the engine 45 is in the automatic stop state, that is, the idling stop state.

The restart standby portion 115 references the flag F1 in which the overstroke operation detection state when the idling stop is being performed is recorded (step S21). If the flag F1 is "1," that is, if the overstroke operation is detected when the engine 45 is automatically stopped, the restart standby portion 115 references the output of the overstroke detection switch 160. If the overstroke operation is detected (for example, if the overstroke detection switch 160 is turned on) (step S22: YES), the flag F1 is held at "1" as it is and the process from step S21 is repeated. If the overstroke operation is no longer detected (step S22: NO), the restart standby portion 115 rewrites the flag F1 to "0" (step S23). Thereafter, the process returns to step S21.

When the flag F1 is "0" (step S21: NO), a process for restarting the engine 45 is performed by the engine restart control portion 112. Specifically, the engine restart control portion 112 collects information for judging a restart condition (step S24) and, based on the collected information, judges whether or not the restart condition is satisfied (step S25). If the restart condition is not satisfied, a return to step S24 is performed.

If the restart condition is satisfied (step S25: YES), the engine restart control portion 112 monitors the output of the overstroke detection switch 160 (step S26). If the overstroke detection switch 160 is not operated (step S26: NO), the process from step S24 is repeated. If operation of the overstroke detection switch 160 is detected (for example, the overstroke detection switch 160 is turned on) (step S26: YES), the engine restart control portion 112 executes the process for restarting the engine 45 (step S27). That is, the engine restart control portion 112 makes the relay 77 conductive to actuate the generator/motor 44 and starts the fuel injection control and ignition control. The engine 45 is thereby restarted.

In accordance with such a process, if the overstroke operation is performed when the engine 45 is automatically stopped by the function of the idling stop control portion 111, the restart of the engine 45 is put on standby until the overstroke operation is released. When the overstroke operation is then released once and the overstroke operation is redetected again thereafter, the engine 45 is restarted. A wasteful control, such that idling stop is performed in a state where the overstroke operation is performed and then the engine 45 is restarted immediately, can thereby be avoided. If the overstroke operation is not detected when the engine 45 is being automatically stopped by the function of the idling stop control portion 111 (step S21: NO), then when the overstroke operation is performed with the engine is in automatic stop (step S26: YES), the restart process of the engine 45 (step S27) is executed immediately.

When after restart of the engine 45, the throttle opening is increased by operation of the accelerator grip 32 and the output of the engine 45 increases, the engine speed reaches the transmission rotation speed. The centrifugal clutch 47 is thereby put in the engaged state, the driving force of the engine 45 is transmitted to the rear wheel 4, and the motorcycle 1 starts moving.

Preferably, the restart condition (step S25) includes that the throttle opening degree is less than a predetermined opening degree. In this case, the engine restart control portion 112 judges that the restart condition is not satisfied when the throttle opening degree sensor 95 detects an opening degree not less than the predetermined opening degree. The engine 45 is thus not restarted even if the overstroke operation is performed and the restart of the engine 45 is prohibited. That is, the process of step S25 corresponds to the function of a restart prohibiting means of the present invention. The predetermined opening degree may be an idling opening degree that is set during idling, that is, it may be the fully closed opening degree or may be an opening degree that is slightly greater than the fully closed opening degree. However, the predetermined opening degree is preferably set to a value that is sufficiently small so that the engine speed does not reach the transmission rotation speed. Inadvertent start of movement of the motorcycle 1 during the restart of the engine 45 can thereby be avoided.

In the present preferred embodiment, the restart of the engine 45 includes the swing-back operation as mentioned above. The swing-back operation is an operation of making the crankshaft 48 of the engine 45 rotate by the predetermined angle in the reverse rotation direction. After the swing-back operation, the crankshaft 48 is rotated in the forward rotation direction to restart the engine 45. That is, upon receiving the restart command from the engine restart control portion 112, the motor control portion 119 makes the generator/motor 44 rotate by the predetermined angle in the reverse rotation direction and thereafter starts the rotation in the forward rotation direction to perform cranking of the engine 45. The crankshaft 48 is thereby made to rotate due to inertia and rotates beyond the compression top dead center even if the drive torque of the generator/motor 44 is small. The engine 45 can thereby be started reliably using the compact generator/motor 44 that can be directly coupled to the crankshaft 48.

As described above, with the present preferred embodiment, when the idling stop condition is satisfied, the engine 45 is stopped automatically and transitions into the idling stop state. Wasteful consumption of fuel during a short stop, such as a traffic-light wait, etc., can thereby be suppressed. On the other hand, when the driver performs the overstroke operation in the idling stop state, the engine 45 is restarted. In this process, the engine 45 is restarted without the riding of the driver as a condition.

Also, the overstroke operation for restarting the engine 45 is an operation of rotating the accelerator grip 32 in the closing command direction B beyond the fully closing command position. The engine 45 can thus be restarted with the throttle valve 92 being in the fully closed state. The intake amount when the engine 45 is restarted is thus stable and the engine 45 can thus be restarted reliably and the control for restarting does not become complicated.

Also, the throttle valve 92 is not opened excessively during engine restart and therefore unintended revving of the engine 45 and unintended start of movement of the motorcycle 1 do not occur. There is thus no need to provide a special arrangement, such as a seat switch for preventing erroneous start of movement. The cost can thus be reduced and there is no need to take measures against a sensor fault.

Also, the arrangement is such that erroneous start of movement does not occur even if the restart is performed without the seating of the driver as a condition and therefore restart of the engine during pushing while walking is allowed. Therefore when performing pushing of the motorcycle 1 while walking, the driver can restart the engine 45 as necessary by performing the overstroke operation. The driver can thus push the motorcycle 1 while walking in the state where the engine 45 is running. If the engine 45 is to be stopped, the driver turns off the main switch 40.

By thus putting the engine 45 in the running state even during pushing while walking, the motorcycle 1 can be made to start moving immediately after riding or consumption of the battery 25 can be prevented. The motorcycle 1 that is highly convenient can thus be provided without compromising the idling stop function.

The running of the engine 45 during pushing of the motorcycle 1 while walking is performed intentionally by the driver for the purpose of safety and security, etc., and therefore does not result in a wasteful consumption of fuel.

Also with the present preferred embodiment, if the overstroke operation is detected when the idling stop is being performed, the restart of the engine 45 is put on standby until the overstroke operation is released once. A wasteful control, such that the engine 45 is restarted immediately after idling stop, can thereby be avoided. That is, if the engine 45 is automatically stopped when the driver is performing the overstroke operation, the engine 45 is not restarted unless the driver releases the overstroke operation once. When the driver then performs the overstroke operation again, the engine 45 is restarted in response thereto. Therefore even if the driver performs the overstroke operation unintentionally when the engine 45 is automatically stopped, the automatically stopped engine 45 will not be restarted immediately. Both fuel consumption suppression by automatic stop of the engine 45 and restart of the engine 45 based on the intention of the driver can thereby be achieved with consistency.

To start movement of the motorcycle 1 after the engine 45 has been restarted by the overstroke operation, the driver performs the operation for opening the throttle valve 92 by rotating the accelerator grip 32 in the opening command direction A. The operations for restart of the engine 45 and the start of movement of the motorcycle I can thereby be performed by just the operation of the accelerator grip 32 and the operations are thus simple.

Moreover, some amount of time is required from the overstroke operation, which is the operation in the closing command direction B, to the operation of the accelerator grip in the opening command direction A for making the motorcycle 1 start moving. The restart of the engine 45 is completed and its combustion state stabilizes within this time and therefore a complicated engine control is not required when the throttle valve 92 is opened to make the motorcycle 1 start moving. That is, a smooth transition to the start of movement, at which the load on the engine 45 changes rapidly, is made possible. Also, the engine 45 is already restarted and is in the stable combustion state; therefore, when the driver rotates the accelerator grip 32 in the opening command direction, the engine output increases immediately. A cumbersome sensation thus does not arise during the start of movement.

Also with the present preferred embodiment, the rotation of the accelerator grip 32 is mechanically transmitted to the throttle valve 92 by the accelerator cable 99 and the opening degree control mechanism 150. When the accelerator grip 32 is rotated in the closing command direction B beyond the fully closing command position, the fully closed stopper 142 restricts the rotation of the first pulley 151 and the displacement of the throttle valve 92 in the closing direction is restricted to the fully closed position. Therefore even if the overstroke operation of the accelerator grip 32 is performed, the throttle valve 92 is restricted at the fully closed position. There is thus no need to change a design related to the throttle valve 92. Further, the throttle valve 92 is mechanically restricted at the fully closed position and the overstroke operation can thus be detected without any adverse influence on renewal learning of the fully closed signal value of the throttle opening degree sensor 95.

Also with the present preferred embodiment, when the throttle opening degree sensor 95 is detecting an opening degree not less than the predetermined opening degree, the engine 45 is not restarted even if the overstroke detection switch 160 detects the overstroke operation. The engine 45 is thus prevented from restarting in a state where the throttle opening degree is large and therefore the engine 45 is not revved inadvertently and the motorcycle 1 does not start moving inadvertently. Also, even if the overstroke detection switch 160 malfunctions and the overstroke operation is detected erroneously, the engine 45 is not restarted inadvertently. There is thus no need to provide a malfunction measure for the overstroke detection switch 160, such as making the overstroke detection switch 160 a redundant system, etc.

Even if the restart of the engine 45 is prohibited, the engine 45 can be started using the starter button 35, which is an ordinary engine starting means, and therefore even if the overstroke detection switch 160 malfunctions, the motorcycle 1 can continue to be used.

When stopping the motorcycle 1, the driver operates the front wheel brake lever 39, provided on the handle bar 30, by gripping it together with the accelerator grip 32. In this process, the driver may unintentionally perform the overstroke operation. However, with the arrangement of the present preferred embodiment, even if the overstroke operation is performed when the engine is being automatically stopped, the automatically stopped engine 45 is not restarted immediately.

Further with the arrangement of the present preferred embodiment, the generator/motor 44 performs cranking by applying a torque to the crankshaft 48 when the engine 45 is started and generates electric power by receiving the rotational force of the crankshaft 48 when the engine 45 is running. The generated electric power is used to charge the battery 25.

When the engine 45 is to be restarted, the generator/motor 44 applies the torque in the reverse rotation direction to the crankshaft 48 and immediately thereafter applies the torque in the forward rotation direction. That is, the generator/motor 44 performs the swing-back operation. The crankshaft 48 can thereby be rotated beyond the top dead center by making use of the inertia of the crankshaft 48 and oil can be dispersed within the engine 45 to lubricate the interior immediately before cranking. An urging effect due to inertia and a friction reducing effect due to spreading of the oil can thus be utilized to suppress the output torque required of the generator/motor 44 at a low level. Therefore, even when a crankshaft direct-coupled type motor serving in common as a generator is used as the generator/motor 44, enlargement of the generator/motor 44 can be avoided. Also by using the crank direct-coupled type generator/motor 44, silence during engine start can be improved, durability in terms of mechanism can be improved, and further, the number of parts can be reduced.

The restart of the engine 45 is initiated by the overstroke operation by the driver, and when the motorcycle 1 is to be made to start moving thereafter, the driver rotates the accelerator grip 32 in the opening command direction A opposite to the overstroke operation. There is thus a leeway in time from the restart to the start of movement of the motorcycle 1. Therefore before the operation of making the motorcycle 1 move is performed, the engine restart accompanying the swing-back operation can be completed to put the engine 45 in a stable combustion state. That is, the series of operations from the restart of the engine 45 to the start of movement of the motorcycle I can be completed without the driver being aware of a restart waiting time. Variation of the throttle opening degree before and after the restart of the engine 45 is suppressed and therefore transition to engine control for start of movement, in which the load changes rapidly, can be performed readily in the state where the combustion inside the engine 45 is stabilized.

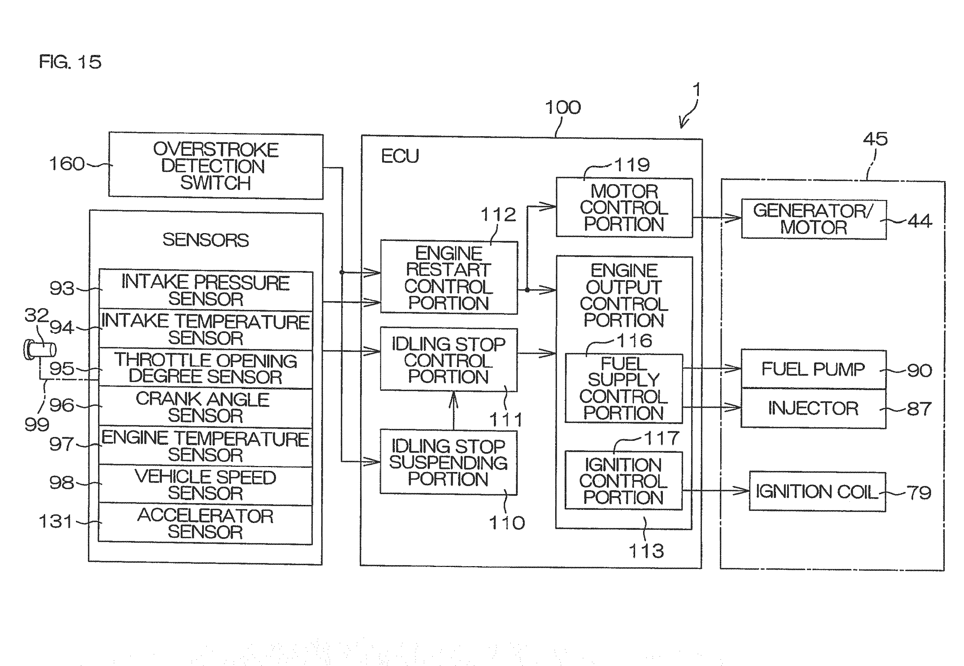

FIG. 15 is a block diagram for describing an arrangement related to control of an engine in a motorcycle according to another preferred embodiment of the present invention. FIG. 1 to FIG. 10 and FIG. 13, which have been described above, shall be referenced again for description of the present preferred embodiment. The functional arrangement of the ECU 100 is shown in FIG. 15 and portions corresponding to the respective portions shown in FIG. 11 described above are provided with the same reference symbols.

The present preferred embodiment does not include the overstroke recording portion 114 and the restart standby portion 115 (see FIG. 11) but includes an idling stop suspending portion 110. The idling stop suspending portion 110 suspends the automatic stop of the engine 45 if the overstroke operation is detected when the idling stop condition is satisfied. That is, the driver can suspend the idling stop by performing the overstroke operation.

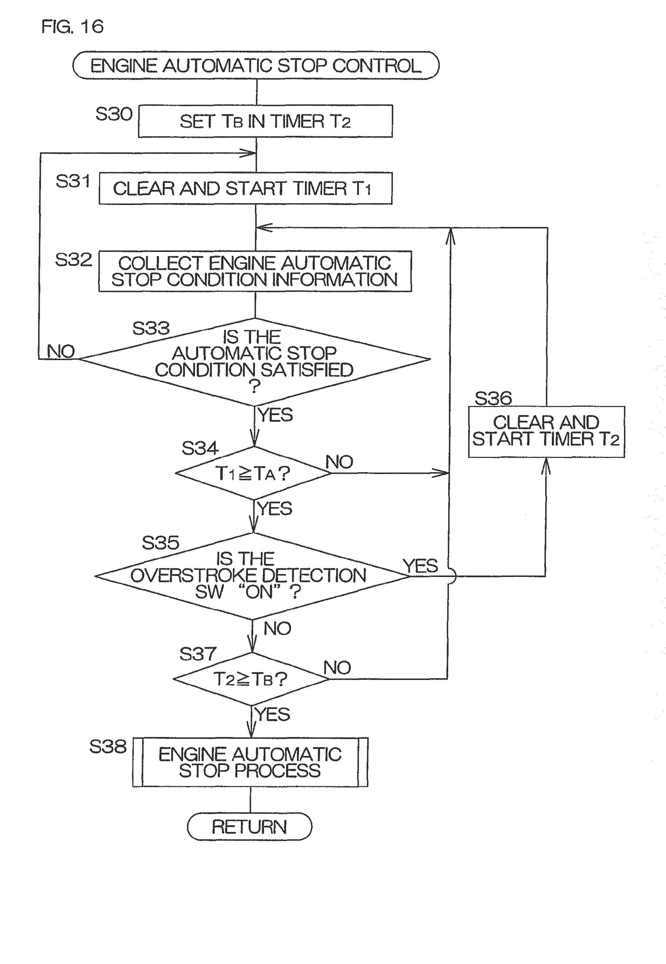

FIG. 16 is a flowchart for describing the flow of a process for automatically stopping the engine 45 by the idling stop control portion 111. The process is repeatedly executed by the ECU 100 at every control cycle while the engine 45 is running. The idling stop control portion 111 sets a predetermined time TB (for example, 2 to 5 seconds) in a timer T2 (step S30) and further clears and starts the timer T1 for measuring the duration of sustenance of the automatic stop condition (step S31). The idling stop control portion 111 then collects information for judging the automatic stop condition of the engine 45 (step S32). Based on the collected information, the idling stop control portion 111 judges whether or not the automatic stop condition is satisfied (step S33). The details of this judgment are the same as those in the case of the first preferred embodiment described above (see FIG. 13).

If the automatic stop condition is satisfied (step S33: YES), the idling stop control portion 111 references the measured time of the timer T1 and compares the measured time with the predetermined time TA (for example, 3 seconds) (step S34). If the measured time of the timer T1 is less than the predetermined time TA (step S34: NO), a return to step S32 is performed and the automatic stop condition is checked (steps S32 and S33). If the automatic stop condition stops being satisfied before the predetermined time TA elapses (step S33: NO), a return to step S31 is performed and the time measurement by the timer T1 is restarted.

If the state in which the automatic stop condition is satisfied is sustained for the predetermined time TA (step S34: YES), this means that the idling stop condition is satisfied. In this case, the idling stop suspending portion 110 references the output of the overstroke detection switch 160 (step S35). If the overstroke detection switch 160 detects the overstroke operation (for example, if the overstroke detection switch 160 is on) (step S35: YES), the idling stop suspending portion 110 clears the measured time of the timer T2 to zero and starts the timer T2 (step S36). For the subsequent process, a return to step S32 is performed.

On the other hand, if when the idling stop condition is satisfied (step S34: YES), the overstroke detection switch 160 is not detecting the overstroke operation (step S35: NO), the idling stop suspending portion 110 compares the measured time of the timer T2 with the predetermined time TB (step S37). If the measured time of the timer T2 has not reached the predetermined time TB (step S37: NO), the process from step S32 is repeated. On the other hand, if the measured time of the timer T2 has reached the predetermined time TB (step S37: YES), the idling stop control portion 111 performs the process for automatically stopping the engine 45 (step S38). That is, the idling stop control portion 111 stops the supply of fuel to the engine 45 and stops the fuel injection control and injection control.

If in such a process, the overstroke operation is detected when the idling stop condition is satisfied (step S35: YES), the timer T2 is cleared and started (step S36). The automatic stop of the engine 45 is thereby suspended for the predetermined time TB.

On the other hand, if the overstroke operation is not detected when the idling stop condition is satisfied (step S35: NO), the engine 45 is automatically stopped immediately because the initial value of the measured time of the timer T2 is TB (step S30). The driver can thus suspend the idling stop by the overstroke operation and operation of another operation system is not required for idling stop suspension.

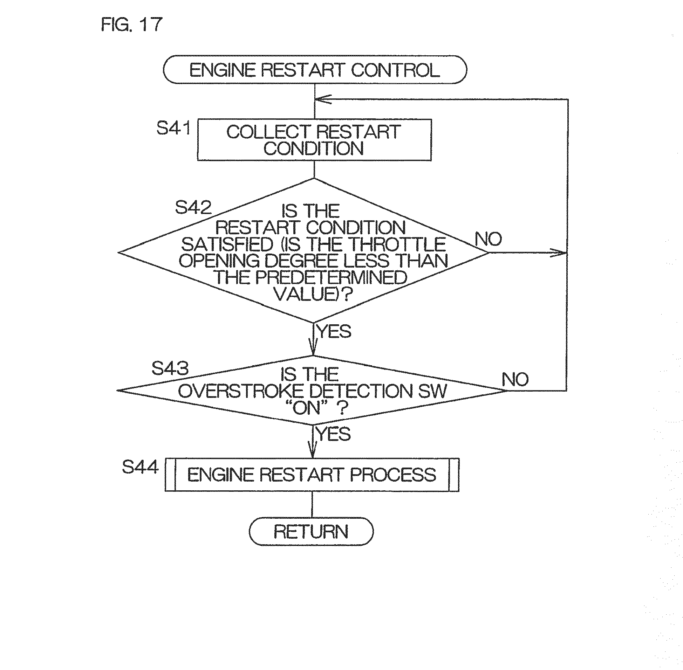

FIG. 17 is a flowchart for describing the flow of a process for restarting the engine 45 that is in the automatic stop state. The process is repeatedly executed by the ECU 100 at every control cycle when the engine 45 is in the automatic stop state.

The engine restart control portion 112 collects information for judging the restart condition (step S41) and, based on the collected information, judges whether or not the restart condition is satisfied (step S42). As in the first preferred embodiment described above, the restart condition preferably includes that the throttle opening degree is less than the predetermined opening degree. In this case, the engine restart control portion 112 judges that the restart condition is not satisfied when the throttle opening degree sensor 95 detects an opening degree not less than the predetermined opening degree. The engine 45 is thus not restarted even if the overstroke operation is performed and the restart of the engine 45 is prohibited. A specific example of the predetermined opening degree is the same as that in the case of the first preferred embodiment.

If the restart condition is not satisfied, the process returns to step S41. If the restart condition is satisfied (step S42: YES), the engine restart control portion 112 monitors the output of the overstroke detection switch 160 (step S43). If the overstroke detection switch 160 is not operated (step S43: NO), the process from step S41 is repeated. If the overstroke detection switch 160 is operated (step S43: YES), the engine restart control portion 112 executes the process for restarting the engine 45 (step S44). That is, the engine restart control portion 112 provides commands to the motor control portion 119 and the engine output control portion 113 to actuate the generator/motor 44 and start the fuel injection control and ignition control. The engine 45 is thereby restarted. As in the case of the first preferred embodiment, the operation related to the restart of the engine 45 preferably includes the swing-back operation.

In accordance with such a process, if the overstroke operation is performed when the engine 45 is in automatic stop, the engine 45 is restarted in response thereto. If the overstroke operation is performed when the idling stop condition is satisfied (step S34: YES), the automatic stop of the engine 45 is suspended. A wasteful control, such that, even though the overstroke operation is being performed, the engine 45 is automatically stopped and the engine 45 is restarted immediately, can thereby be avoided.

When after the restart of the engine 45, the throttle opening is increased by operation of the accelerator grip 32 and the output of the engine 45 increases, the engine speed reaches the transmission rotation speed. The centrifugal clutch 47 is thereby put in the engaged state, the driving force of the engine 45 is transmitted to the rear wheel 4, and the motorcycle 1 starts moving.

As described above, with the present preferred embodiment, even if the idling stop condition is satisfied, the automatic engine stop is suspended if the overstroke operation is detected. Specifically, the engine 45 is not automatically stopped until the state in which the overstroke operation is not detected is sustained for the predetermined time TB. The idling stop can thereby be suspended by operation of the accelerator grip 32 (overstroke operation). That is, if the driver judges that the automatic engine stop is not necessary, the idling stop can be suspended by the intention of the driver. Moreover, the idling stop can be suspended by the operation of the accelerator grip 32 and the operation is thus simple.

For example, there are cases where, even under circumstances where the idling stop condition is satisfied and the engine 45 undergoes automatic stop, the restart of the engine 45 becomes necessarily in a short time thereafter. Therefore when the driver foresees the possibility of the need to restart the engine in a short time after the engine 45 undergoes automatic stop, he/she performs the overstroke operation to suspend the automatic stop of the engine 45. The motorcycle 1 can thus be made to start moving immediately without having to perform the engine restart operation and without waiting for engine restart. Also, the operations for suspension of engine automatic stop, release of the suspension, and start of movement of the motorcycle 1 can all be performed by operations of the accelerator grip 32 and there is no need to change operating members from one to another. The operation is thus simple and does not require a special operation means for idling stop suspension and therefore the arrangement is simple and cost can be reduced accordingly.

When stopping the motorcycle 1, the driver operates the front wheel brake lever 39, provided on the handle bar 30, by gripping it together with the accelerator grip 32. The driver can thus perform the overstroke operation easily while operating the front wheel brake lever 39 and the operation for suspending the idling stop is thus easy.

Although two preferred embodiments of the present invention have been described above, the present invention may be carried out in yet other modes. For example, although with each of the preferred embodiments above, the accelerator grip 32 and the throttle valve 92 are mechanically coupled, the present invention may also be applied to a so-called electric throttle system. An electric throttle system includes an accelerator opening degree sensor detecting the operation amount of the accelerator grip 32 and a throttle actuator that actuates the throttle valve 92 in accordance with the detection results of the accelerator opening degree sensor. For example, the accelerator opening degree sensor may be arranged to detect the rotation angle of the supporting shaft 153 of the opening degree control mechanism 150. In this case, the supporting shaft 153 and the throttle valve 92 are not coupled, and the throttle valve 92 is rotated by the separately provided throttle actuator.

Also, although with each of the preferred embodiments above, the overstroke operation is detected by the overstroke detection switch 160, the overstroke operation may be detected by an overstroke detection means of another arrangement. For example, an angle sensor detecting the rotation angle of the accelerator grip 32 may be provided to detect the overstroke operation.

Also, the idling stop condition and the restart condition described with each of the preferred embodiments are but one example of each and conditions that differ from the conditions described above may be adopted.

Also, although with each of the preferred embodiments above, the power transmission path between the engine 45 and the drive wheel (rear wheel 4) is engaged/disengaged by the centrifugal clutch 47, the clutch for engaging/disengaging the power transmission path may be of another form, such as a hydraulic clutch, an electromagnetic clutch, etc.

Also, although with each of the preferred embodiments above, the scooter-type motorcycle 1 has been described as an example, the present invention may be applied to a motorcycle of another form, such as a moped type, sport type, etc. Further, the present invention is not restricted to a motorcycle and may be applied to a saddle type vehicle of another form, such as an all-terrain vehicle, snowmobile, etc.

While preferred embodiments of the present invention have been described in detail, these are merely specific examples used to clarify the technical contents of the present invention, and the present invention should not be interpreted as being limited only to these specific examples, and the spirit and scope of the present invention shall be limited only by the appended claims.

The present application corresponds to Japanese Patent Application No. 2013-079821 filed on April 5, 2013 with the Japan Patent Office, and the entire disclosure of this application is incorporated herein by reference.

## Claims

1. A saddle type vehicle (1) comprising:
an engine (45) including a throttle valve (92) capable of opening degree adjustment between a fully closed position and a fully open position;
an accelerator grip (32), provided on a handle bar (30) in manner enabling rotation in an opening command direction and a closing command direction, for adjusting the opening degree of the throttle valve (92);
a full closing holding mechanism (150) adapted to hold the accelerator grip (32) at a fully closing command position of commanding full closing of the throttle valve (92) in a state where an operating force is not applied to the accelerator grip (32), and to allow rotation of the accelerator grip (32) in the closing command direction beyond the fully closing command position when an operating force of not less than a predetermined value in the closing command direction is applied to the accelerator grip (32);
an overstroke detection means (160) adapted to detect an overstroke operation that is an operation by which the accelerator grip (32) is rotated by not less than a predetermined angle in the closing command direction beyond the fully closing command position;
an idling stop control means (111) adapted to automatically stop the engine (45) when a predetermined idling stop condition is satisfied while the engine (45) is running;
a restart control means (112) which, when a predetermined restart condition is satisfied with the engine (45) being in automatic stop, is adapted to restart the engine (45) in response to the overstroke detection means (160) detecting the overstroke operation;
an overstroke recording means (114) adapted to record whether or not the overstroke operation is detected by the overstroke detection means (160) when the idling stop control means (111) automatically stops the engine (45); and
a restart standby means (115), which, when there is a record of detection of the overstroke operation in the overstroke recording means (114), is adapted to put the restart of the engine (45) by the restart control means (112) on standby until the overstroke detection means (160) no longer detects the overstroke operation.

2. The saddle type vehicle (1) according to Claim 1, comprising, in place of the overstroke recording means (114) and the restart standby means (115):
an idling stop suspending means (110), which, if the overstroke detection means (160) detects the overstroke operation when the idling stop condition is satisfied, is adapted to suspend the automatic stop of the engine (45) by the idling stop control means (111) until a state in which the overstroke detection means (160) does not detect the overstroke operation is sustained for a predetermined time.

3. The saddle type vehicle (1) according to Claim 1 or 2, further comprising:
a transmitting mechanism (99) adapted to mechanically transmit the rotation of the accelerator grip (32) to the throttle valve (92); and
a fully closed stopper (142) adapted to restrict the displacement of the throttle valve (92) in the throttle valve (92) closing direction to the fully closed position even when the accelerator grip (32) is rotated in the closing command direction beyond the fully closing command position.

4. The saddle type vehicle (1) according to any one of Claims I to 3, further comprising:
a throttle opening degree sensor (95) adapted to detect the opening degree of the throttle valve (92); and
a restart prohibiting means (S25), which, even if the overstroke detection means (160) detects the overstroke operation, is adapted to prohibit the restart of the engine (45) by the restart control means (112) when the throttle opening degree sensor (95) detects an opening degree not less than a predetermined opening degree.

5. The saddle type vehicle (1) according to any one of Claims 1 to 4, further comprising: a brake lever (39) mounted on the handle bar (30) and arranged to be operated by the driver gripping the brake lever (39) together with the accelerator grip (32).

6. The saddle type vehicle (1) according to any one of Claims 1 to 5, wherein the engine (45) includes a crankshaft (48) rotatable in a forward rotation direction and a reverse rotation direction, and
the saddle type vehicle (1) further comprises:
a generator/motor (44) adapted to apply a torque in the forward rotation direction or reverse rotation direction to the crankshaft (48) and to generate electric power upon receiving a rotational force of the crankshaft (48); and
a motor control means (119), which, during restart of the engine (45) by the restart control means (112), is adapted to drive the generator/motor (44) to apply a torque in the reverse rotation direction to the crankshaft (48) and immediately thereafter apply a torque in the forward rotation direction to the crankshaft (48).
